# EUROPEAN PATENT SPECIFICATION

(11) **EP 4 442 631 B1**
(45) Date of publication and mention of the grant of the patent: **11.11.2026**
(21) Application number: 24167390.4
(22) Date of filing: 28.03.2024
(51) Int. Cl.: B66F 7/06, B66F 9/06, B66F 9/075

(54) **CARRIAGE**
SCHLITTEN
CHARIOT

(30) Priority: 31.03.2023 JP 2023058721
(43) Date of publication of application: 09.10.2024
(73) Proprietor: Nabtesco Corporation, Tokyo (JP)
(72) Inventor: Wanaka, Yuta, Tokyo, 102-0093 (JP); Nakai, Yuto, Tokyo, 102-0093 (JP); Hasegawa, Noriaki, Tokyo, 102-0093 (JP); Ishida, Taisuke, Tokyo, 102-0093 (JP); Uchihara, Masato, Tokyo, 102-0093 (JP)
(74) Representative: Grünecker Patent- und Rechtsanwälte PartG mbB

(56) References cited:
- JP-A- 2018 203 092
- KR-A- 20220 104 989
- US-A1- 2020 391 986

## Description

### TECHNICAL FIELD

The present invention relates to a carriage.

### BACKGROUND

In the conventional art, carriages are known as machines that can be used for cargo handling. For example, Japanese Patent Application Publication No. 2020-158289 discloses a forklift including a body and a fork. Such forklifts can travel with objects being placed on the fork, to transport the objects. Furthermore, US 2020/391986 A1 and KR 2022 0104989 A also discloses such kind of forklift. Document US 2020 391986 A1 discloses the preamble of claim 1.

There has been a demand for more stable carriages that are less likely to fall. More particularly, it has been desired to provide carriages that can avoid falling more reliably while they have objects placed on the fork.

### SUMMARY

The present invention has been made in view of such circumstances, and an object of the invention is to provide carriages that are less likely to fall.

A first aspect of the present disclosure provides a carriage including: a first base including wheels; a second base positioned above the first base; a lifting unit for lifting the second base from the first base or lowering the second base to the first base; a loading unit having a fork for holding an object, the loading unit being configured to load or unload an object; and a moving unit for moving the loading unit away from or toward the second base in a front-rear direction in which the fork extends wherein the loading unit includes a load lifting unit for lifting the fork from the second base or lowering the fork toward the second base wherein the load lifting unit lifts or lowers the fork between a position above an upper surface of the second base and a position below the upper surface.

According to a second aspect of the present disclosure, in the carriage relating to the above-described first aspect, the wheels may include: a front wheel positioned on a front side toward which the fork extends in the front-rear direction; and a rear wheel positioned on a rear side of the front wheel, the rear side being opposite to the front side in the front-rear direction.

According to a third aspect of the present disclosure, in the carriage relating to the above-described second aspect, a center of gravity of the lifting unit may be positioned on a rear side of the front wheel.

According to the claimed aspect of the present disclosure, in the carriage relating to each of the above-described first to third aspects, the loading unit may include a load lifting unit for lifting the fork from the second base or lowering the fork toward the second base.

According to the claimed aspect of the present disclosure, in the carriage relating to the above-described fourth aspect, the load lifting unit may lift or lower the fork between a position above an upper surface of the second base and a position below the upper surface.

According to a sixth aspect of the present disclosure, in the carriage relating to the above-described fifth aspect, the loading unit may have a mast housing therein the load lifting unit.

According to a seventh aspect of the present disclosure, in the carriage relating to each of the above-described first to sixth aspects, the lifting unit may include: a first lifting unit that is connected to a first site of the first base and to a second site of the second base, the first lifting unit being configured to lift the second base from the first base or lower the second base to the first base; and a second lifting unit that is connected to a third site of the first base and to a fourth site of the second base, the second lifting unit being configured to lift the second base from the first base or lower the second base to the first base. The first and third sites may sandwich a center of the first base in the front-rear direction and in a width direction that is perpendicular to the front-rear direction and parallel to a horizontal direction. The second and fourth sites may sandwich a center of the second base in the front-rear direction and in the width direction.

According to an eighth aspect of the present disclosure, in the carriage relating to the above-described seventh aspect, the first base may be shaped like a rectangle when seen in a lifting direction in which the lifting unit lifts or lowers the second base. The first site may be positioned at a first corner of the first base. The third site may be positioned at a second corner of the first base, the second corner being diagonally opposite to the first corner. The second base may be shaped like a rectangle when seen in the lifting direction. The second site may be positioned at a third corner of the second base. The fourth site may be positioned at a fourth corner of the second base, the fourth corner being diagonally opposite to the third corner.

According to a ninth aspect of the present disclosure, the carriage relating to the above-described second or third aspect may include a front wheel lifting unit for lifting a portion of the first base that faces a front side such that the front wheel moves away from a surface on which the carriage is placed.

According to a tenth aspect of the present disclosure, in the carriage relating to the above-described second or third aspect, the first base may include: a first base body having the wheels; and a first base body lifting unit for changing a distance between the front wheel and the first base body in a lifting direction in which the lifting unit lifts or lowers the second base.

According to an eleventh aspect of the present disclosure, the carriage relating to the above-described ninth or tenth aspect may include a sensor for measuring a load applied to the front wheel and a load applied to the rear wheel.

According to a twelfth aspect of the present disclosure, in the carriage relating to the above-described second or third aspect, the wheels may include a plurality of front wheels each of which is said front wheel. The moving unit may be positioned between the front wheels in a width direction that is perpendicular to the front-rear direction and parallel to a horizontal direction.

According to a thirteenth aspect of the present disclosure, in the carriage relating to each of the above-described first to twelfth aspects, the moving unit may include: a first cylinder connected to the second base; a second cylinder connected to the loading unit; and a connecting unit connected to the first and second cylinders. The first cylinder may move the connecting unit from or to the second base in the front-rear direction. The second cylinder may move the loading unit from or to the connecting unit in the front-rear direction.

According to a fourteenth aspect of the present disclosure, in the carriage relating to each of the above-described first to thirteenth aspects, the wheels may include a first wheel and a second wheel having a smaller diameter than the first wheel.

According to a fifteenth aspect of the present disclosure, the carriage relating to the above-described fourteenth aspect may include: a first motor for inputting rotation into the first wheel; and a second motor for inputting rotation into the second wheel. The first motor may have larger output capacity than the second motor.

According to a sixteenth aspect of the present disclosure, the carriage relating to the above-described fourteenth aspect may include: a first motor for inputting rotation into the first wheel; a first speed reducer for reducing rotation input from the first motor and transmitting the reduced rotation to the first wheel; a second motor for inputting rotation into the second wheel; and a second speed reducer for reducing rotation input from the second motor and transmitting the reduced rotation into the second wheel. The first speed reducer may have a higher reduction ratio than the second speed reducer.

According to a seventeenth aspect of the present disclosure, in the carriage relating to the above-described fifteenth or sixteenth aspect, the first wheel may be a front wheel positioned on a front side toward which the fork extends in the front-rear direction, and the second wheel may be a rear wheel positioned on a rear side of the front wheel in the front-rear direction, the rear side being opposite to the front side.

According to an eighteenth aspect of the present disclosure, in the carriage relating to each of the above-described first to seventeenth aspects, the wheels may be mecanum wheels.

### ADVANTAGEOUS EFFECTS

The present invention can provide carriages that are less likely to fall.

### BRIEF DESCRIPTION OF THE DRAWINGS

Fig. 1A is a perspective view showing a carriage relating to an embodiment.
Fig. 1B is a perspective view showing the carriage relating to the embodiment.
Fig. 2 is a perspective view of a wheel body, a motor, and a speed reducer relating to the embodiment.
Fig. 3 is a perspective view showing the carriage relating to the embodiment.
Fig. 4A is a perspective view showing the carriage relating to the embodiment.
Fig. 4B is a perspective view showing the carriage relating to the embodiment.
Fig. 5 is a perspective view showing part of the carriage relating to the embodiment in an enlarged manner.
Fig. 6 is a plan view showing the carriage relating to the embodiment.
Fig. 7 shows how the carriage relating to the embodiment works.
Fig. 8 shows how the carriage relating to the embodiment works.
Fig. 9 shows how the carriage relating to the embodiment works.
Fig. 10 shows how the carriage relating to the embodiment works.
Fig. 11 shows how the carriage relating to the embodiment works.
Fig. 12 shows how the carriage relating to the embodiment works.
Fig. 13 shows how the carriage relating to the embodiment works.
Fig. 14 is a side view showing an example of the carriage in a second modification example.
Fig. 15 is a side view showing an example of the carriage in the second modification example.
Fig. 16 is a plan view showing an example of the wheels, motors and speed reducers in a third modification example.
Fig. 17 is a plan view showing an example of the wheels, motors and speed reducers in the third modification example.
Fig. 18 is a perspective view showing an example of the carriage in the third modification example.
Fig. 19 is a side view showing a carriage relating to a comparative example.

### DESCRIPTION OF THE PREFERRED EMBODIMENTS

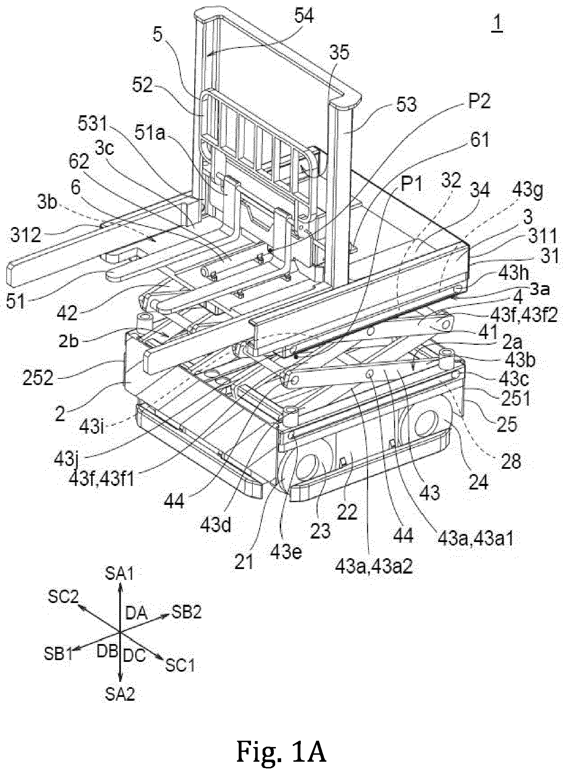

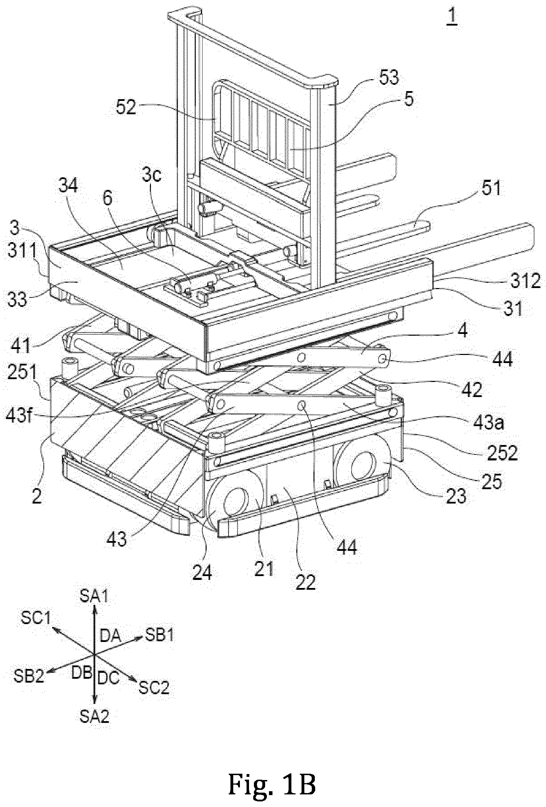

Embodiments of the present disclosure will now be described in detail with reference to the appended drawings. Fig. 1A is a perspective view showing a carriage 1 according to an embodiment. Fig. 1B is a perspective view showing the carriage 1 relating to the embodiment from the opposite side than in Fig. 1A.

As shown in Figs. 1A and 1B, the carriage 1 has a first base 2, a second base 3, a lifting unit 4, a loading unit 5, and a moving unit 6. The first base 2 has wheels 21. The second base 3 is positioned above the first base 2. The lifting unit 4 can lift or lower the second base 3 from/to the first base 2. The loading unit 5 has a fork 51 for holding an object to load or unload the object. The moving unit 6 can move the loading unit 5 away from/toward the second base 3 in a front-rear direction DB in which the fork 51 extends.

The carriage 1 relating to the present embodiment can travel with an object being placed on the fork 51, to transport the object. For example, the carriage 1 is a carrier that does not require an operator to assist its traveling such as an automatic guided vehicle (AGV) and a rail guided vehicle (RGV) (i.e., an unmanned carrier). Alternatively, the carriage 1 may be a carrier that requires an operator to assist its traveling.

The term "lifting direction DA" refers to the direction in which the lifting unit 4 can lift or lower the second base 3. The term "horizontal direction" refers to the direction perpendicular to the lifting direction DA. The term "front-rear direction DB" refers to the direction in which the fork 51 extends and which is perpendicular to the lifting direction DA. The term "width direction DC" refers to the direction that is perpendicular to the front-rear direction DB and parallel to the horizontal direction. In the lifting direction DA, the upper side SA1 refers to the side where the second base 3 is positioned with respect to the first base 2. In the lifting direction DA, the lower side SA2 refers to the opposite side to the upper side SA1. In the front-rear direction DB, the front side SB1 refers to the side where the tip of the fork 51 is positioned with respect to the root of the fork 51. In the front-rear direction DB, the rear side SB2 refers to the opposite side to the front side SB1. In the width direction DC, a first side SC1 refers to one of the sides (the right side in Fig. 1A). In the width direction DC, a second side SC2 refers to the opposite side to the first side SC1.

The first base 2 has the wheels 21 and can travel on a floor. In the present embodiment, the first base 2 has a first base body 22 and the wheels 21 provided on the first base body 22. The first base 2 is shaped like a rectangle when seen in the lifting direction DA. In the present embodiment, the first base body 22 is shaped like a rectangle when seen in the lifting direction DA. Accordingly, the first base 2 is as a whole shaped like a rectangle when seen in the lifting direction DA. This means that the first base 2 has four corners 25.

For example, the first base 2 has more than on wheel 21. In the present embodiment, the wheels 21 of the first base 2 include front wheels 23 and rear wheel 24. The front wheels 23 are positioned on the front side SB1 in the front-rear direction DB to which the fork 51 points. The front wheels 23 are one or more of the wheels 21 that are positioned on the farthest front side SB1 in the front-rear direction DB. The rear wheels 24 are positioned on the rear side SB2, which is opposite to the front side SB1 in the front-rear direction DB, with respect to the front wheels 23. In the present embodiment, the wheels 21 include more than one front wheel 23. In the present embodiment, the wheels 21 include two front wheels 23 that are arranged next to each other in the width direction DC. In the present embodiment, the wheels 21 include more than one rear wheel 24. According to the example shown in Fig. 1A, the wheels 21 include two rear wheels 24 that are arranged next to each other in the width direction DC. The two front wheels 23 and two rear wheels 24 are respectively positioned in the vicinity of the four corners 25 of the first base 2. The numbers of the front and rear wheels 23 and 24 of the wheels 21 are not limited to those described in the shown example. The wheels 21 may include two front wheels 23 and one rear wheel 24. The wheels 21 may include one front wheel 23 and two rear wheels 24.

The wheels 21 can be driven by any units as long as they can cause the carriage 1 to travel. For example, the first base 2 may further include a motor 7, and the motor 7 can drive the wheels 21. The following describes this example. In this case, the carriage 1 has the motor 7 for inputting rotation to the wheels 21. The carriage 1 further includes a speed reducer 8 for reducing the rotation input from the motor 7 and transmitting the reduced rotation to the wheels 21. In the present embodiment, the carriage 1 includes a plurality of motors 7 and a plurality of speed reducers 8 respectively mounted on the plurality of wheels 21.

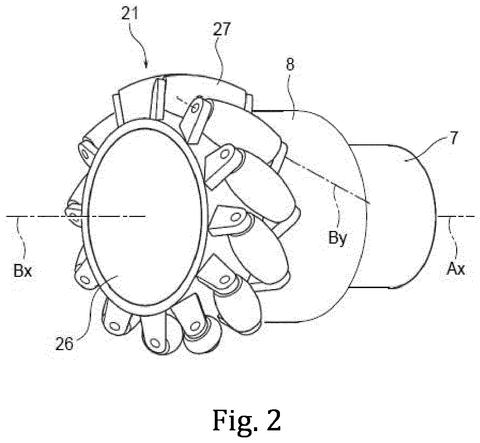

In the present embodiment, the wheels 21 are mecanum wheels. The mecanum wheels 21 each include a wheel body 26, and a plurality of rollers 27 rotatably mounted on the outer periphery of the wheel body 26. The motors 7 and speed reducers 8 are attached to the wheel bodies 26 of the wheels 21. Fig. 2 is a perspective view showing the wheel body 26 of the wheel 21 relating to the present embodiment as well as the motor 7 and speed reducer 8 attached to the wheel body 26.

According to the example shown in Fig. 2, the motor 7 inputs rotation to the wheel body 26 of the wheel 21. The speed reducer 8 reduces the rotation input from the motor 7 and transmits the reduced rotation to the wheel body 26. In the example shown in Fig. 2, the speed reducer 8 is positioned between the motor 7 and the wheel body 26. The speed reducer 8 is connected to the output shaft of the motor 7 and also to the wheel body 26. The speed reducer 8 may be at least partly housed in the wheel body 26. In the example shown in Fig. 2, the speed reducer 8 is partly housed in the wheel body 26. According to the example shown in Fig. 2, the rollers 27 are held on the wheel body 26 such that they are rotatable on an axis of rotation By that is inclined with respect to the axis of rotation Bx of the wheel body 26. The axis of rotation By of the rollers 27 extends at an angle of about 45° with respect to the axis of rotation Bx of the wheel body 26.

Since a mecanum wheel having the above-described configuration is used as the wheel 21, the carriage 1 can move not only in the font-rear direction DB but also in other directions. For example, having mecanum wheels as the wheels 21, the carriage 1 can travel in the width direction DC. In addition, the carriage 1 can travel in the horizontal direction that is non-parallel to the front-rear direction DB and the width direction DC. Furthermore, the carriage 1 can pivot within the horizontal direction on a pivot axis that extends through the carriage 1.

The second base 3 is positioned above the first base 2. The second base 3 is lifted or lowered from/to the first base 2 by the lifting unit 4, which will be described below. In the present embodiment, the second base 3 is shaped like a rectangle when seen in the lifting direction DA. This means that the second base 3 has four corners 31. According to the example shown in Fig. 1A, the second base 3 has a second base body 33 and a cover 34 covering part of the second base body 33 from the upper side SA1. In the present embodiment, the moving unit 6, described below, is provided on the second base body 33. The cover 34 covers at least part of the moving unit 6 from the upper side SA1. Although Figs. 1A and 1B show the cover 34 covering part of the moving unit 6, the other drawings do not show the cover 34.

The lifting unit 4 is configured to lift or lower the second base 3 from/to the first base 2. In the present embodiment, the lifting unit 4 includes a pantograph. According to the example shown in Fig. 1A, the lifting unit 4 includes a first lifting unit 41 and a second lifting unit 42. The first lifting unit 41 is connected to a first site 2a of the first base 2 and a second site 3a of the second base 3, to lift or lower the second base 3 from/to the first base 2. The second lifting unit 42 is connected to a third site 2b of the first base 2 and a fourth site 3b of the second base 3, to lift or lower the second base 3 from/to the first base 2. The first and second lifting units 41 and 42 each have a pantograph.

According to the example shown in Fig. 1A, the lifting unit 4 includes a plurality of links 43 that are coupled to each other to form the pantographs. According to the example shown in Fig. 1A, the lifting unit 4 includes a plurality of coupling units 44 coupling together the links 43. The coupling units 44 each couple two of the links 43 such that the two links 43 can rotate relative to each other. The lifting unit 4 including the pantographs is formed by the coupling units 44 coupling the links 43. The lifting unit 4 may include a plurality of pantographs stacked on each other in the lifting direction DA.

Lower-side links 43a indicate two of the links that are coupled to each other via one of the coupling units 44 that is located on the farthest lower side SA2. There are two lower-side links 43a, one of which is referred to as a first lower-side link 43a1 and the other a second lower-side link 43a2.

The first lower-side link 43a1 has a fixed end 43b that is fixedly attached to the first base 2 such that the first lower-side link 43a1 is rotatable relative to the first base 2. The fixed end 43b is rotatable relative to the first base 2 on a rotatable shaft 43c. The rotatable shaft 43c remains at the same position relative to the first base 2.

The second lower-side link 43a2 has a movable end 43d that is coupled with the first base 2 such that the second lower-side link 43a2 is rotatable relative to the first base 2. The movable end 43d is rotatable relative to the first base 2 on a rotatable shaft 43e.

The movable end 43d and rotatable shaft 43e are movable relative to the first base 2 such that the distance between the fixed end 43b and the movable end 43d in the horizontal direction can vary. According to the example shown in Fig. 1A, the first base 2 has a linear groove 28 extending in a single direction. The rotatable shaft 43e of the movable end 43d is partly housed in the linear groove 28 such that the rotatable shaft 43e can slide along the linear groove 28. In the example shown in Fig. 1A, the rotatable shaft 43e can slide along the linear groove 28, so that the distance between the fixed end 43b and the movable end 43d in the horizontal direction can vary. In the example shown in Fig. 1A, the fixed end 43b and movable end 43d are next to each other in the front-rear direction DB. The linear groove 28 extends in the front-rear direction DB. Accordingly, the rotatable shaft 43e can slide along the linear groove 28, so that the distance between the fixed end 43b and the movable end 43d in the front-rear direction DB can vary.

Upper-side links 43f indicate two of the links that are coupled to each other via one of the coupling units 44 that is on the farthest upper side SA1. There are two upper-side links 43f, one of which is referred to as a first upper-side link 43f1 and the other a second upper-side link 43f2.

The first upper-side link 43f1 has a fixed end 43g that is fixedly attached to the second base 3 such that the first upper-side link 43f1 is rotatable relative to the second base 3. The fixed end 43g is rotatable relative to the second base 3 on a rotational shaft 43h. The rotatable shaft 43h remains at the same position relative to the second base 3.

The second upper-side link 43f2 has a movable end 43i that is coupled with the second base 3 such that the second upper-side link 43f2 is rotatable relative to the second base 3. The movable end 43i is rotatable relative to the second base 3 on a rotatable shaft 43j.

The movable end 43i and rotatable shaft 43j are movable relative to the second base 3 such that the distance between the fixed end 43g and the movable end 43i in the horizontal direction can vary. According to the example shown in Fig. 1A, the second base 3 has a first linear groove 32 extending in a single direction. The rotatable shaft 43j of the movable end 43i is partly housed in the first linear groove 32 such that the rotatable shaft 43j can slide along the first linear groove 32. In the example shown in Fig. 1A, the rotatable shaft 43j can slide along the first linear groove 32, so that the distance between the fixed end 43g and the movable end 43i in the horizontal direction can vary. In the example shown in Fig. 1A, the fixed end 43g and movable end 43i are next to each other in the front-rear direction DB. The first linear groove 32 extends in the front-rear direction DB. Accordingly, the rotatable shaft 43j can slide along the first linear groove 32, so that the distance between the fixed end 43g and the movable end 43i in the front-rear direction DB can vary.

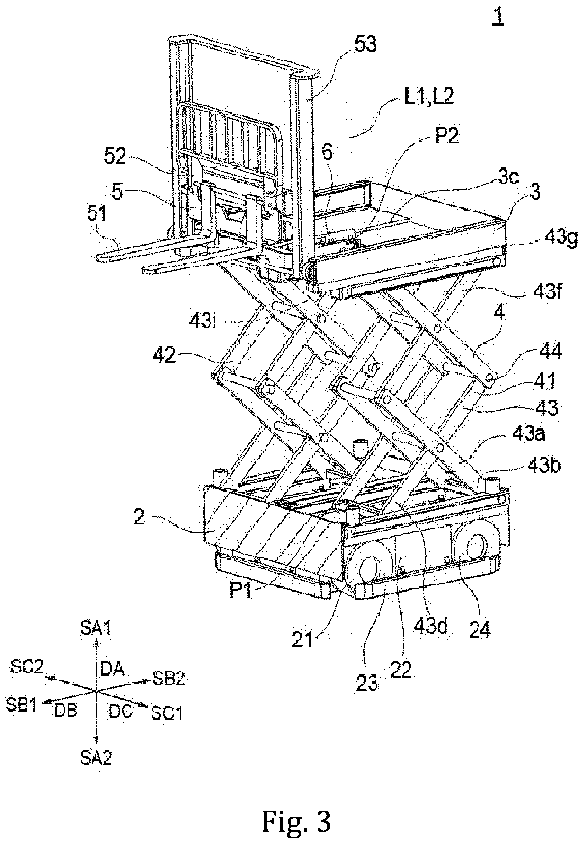

Fig. 3 is a perspective view showing the carriage 1 according to the embodiment in a different state than in Figs. 1A and 1B. The carriage 1 transitions from the state shown in Figs. 1A and 1B to the state shown in Fig. 3 in the following manner. The lifting unit 4 moves the second base 3 toward the upper side SA1 in the lifting direction DA, and the moving unit 6, described below, moves the loading unit 5 and a mast 53 toward the front side SB1 in the front-rear direction DB. In the state shown in Fig. 3, the lifting unit 4 is expanded in the lifting direction DA when compared with the state shown in Figs. 1A and 1B. The lifting unit 4 including the pantographs can be expanded in the lifting direction DA as shown in Fig. 3 from the state shown in Figs. 1A and 1B by reducing the distance in the horizontal direction between the fixed end 43b and the movable end 43d. This can result in moving the second base 3 toward the upper side SA1 in the lifting direction DA. As the lifting unit 4 including the pantographs is expanded in the lifting direction DA, a force acts upon the two upper-side links 43f in such a direction the distance between the fixed end 43g and the movable end 43i in the horizontal direction can be reduced. Here, it should be noted that the movable end 43i of the carriage 1 relating to the present embodiment is movable such that the distance between the fixed end 43g and the movable end 43i in the horizontal direction can be reduced. As the movable end 43i moves to reduce the distance between the fixed end 43g and the movable end 43i in the horizontal direction, the force applied to the two upper-side links 43f when the lifting unit 4 is expanded in the lifting direction DA can be released.

The lifting unit 4 including the pantographs can be collapsed in the lifting direction DA from the state shown in Fig. 3 by increasing the distance in the horizontal direction between the fixed end 43b and the movable end 43d. This can result in moving the second base 3 toward the lower side SA2 in the lifting direction DA. As the movable end 43i can move to reduce the distance between the fixed end 43g and the movable end 43i in the horizontal direction, the force applied to the two upper-side links 43f when the lifting unit 4 is collapsed in the lifting direction DA can be released.

According to the example shown in Figs. 1A, 1B and 3, the lifting unit 4 includes the first and second lifting units 41 and 42. The first and second lifting units 41 and 42 each have the pantograph described above. In other words, the first and second lifting units 41 and 42 each have the plurality of links 43 including the two lower-side links 43a and two upper-side links 43f and also includes the plurality of coupling units 44.

The lifting unit 4 has the center of gravity being positioned on the rear side SB2 of the front wheels 23. Here, the center of gravity of the lifting unit 4 means the center of gravity of the entire lifting unit 4. For example, the center of gravity of the lifting unit 4, which has the pantographs as shown in Figs. 1A, 1B and 3, is the center of gravity of the entire lifting unit 4 including the links 43 and coupling units 44. As the lifting unit 4 includes the first and second lifting units 41 and 42, the center of gravity of the lifting unit 4 is the center of gravity of the entire lifting unit 4 including the first and second lifting units 41 and 42. The form of the lifting unit 4 may change as the second base 3 is lifted or lowered. The lifting unit 4 relating to the present embodiment is expanded or collapsed in the lifting direction DA as the second base 3 is lifted or lowered. When the form of the lifting unit 4 changes in this way, the center of gravity of the lifting unit 4 remains positioned on the rear side SB2 of the front wheels 23 throughout the change of the form of the lifting unit 4.

The fact that the center of gravity of the lifting unit 4 remains positioned on the rear side SB2 of the front wheels 23 provides the following advantages. It is required that the carriage 1 be prevented from falling more reliably while having objects being placed on the fork 51. More specifically, it is desired that the carriage 1 can be prevented from falling toward the front side SB1. When the carriage 1 falls toward the front side SB1, the carriage 1 may rotate toward the front side SB1 about the point of contact where the front wheels 23 meet the floor on which the carriage 1 is traveling. Since the center of gravity of the lifting unit 4 is positioned on the rear side SB2 of the front wheels 23, the weight of the lifting unit 4 can act to prevent the rotation of the carriage 1 about the point of contact where the front wheels 23 meet the floor on which the carriage 1 is traveling. In other words, the weight of the lifting unit 4 can function to prevent the carriage 1 from falling toward the front side SB1. As a result, the carriage 1 can be reliably prevented from falling toward the front side SB1.

The following describes the center P1 of the first base 2 in the front-rear direction DB and in the width direction DC that is perpendicular to the front-rear direction DB and parallel to the horizontal direction. The center P1 of the first base 2 is defined in the following manner. A first plane is determined that is parallel to the lifting direction DA and front-rear direction DB and that is an imaginary plane at equal distances from the opposite ends of the first base 2 in the width direction DC. Additionally, a second plane is determined that is parallel to the lifting direction DA and width direction DC and that is an imaginary plane at equal distances from the opposite ends of the first base 2 in the front-rear direction DB. Subsequently, a straight line L1 where the first and second planes intersect is determined. In Fig. 3, the alternate long and short dash line shows an example of the straight line L1. The center P1 of the first base 2 is where the straight line L1 extends through the first base 2.

The following describes the center P2 of the second base 3 in the front-rear direction DB and in the width direction DC. The center P2 of the second base 3 is defined in the following manner. A third plane is determined that is parallel to the lifting direction DA and front-rear direction DB and that is an imaginary plane at equal distances from the opposite ends of the second base 3 in the width direction DC. Additionally, a fourth plane is determined that is parallel to the lifting direction DA and width direction DC and that is an imaginary plane at equal distances from the opposite ends of the second base 3 in the front-rear direction DB. Subsequently, a straight line L2 where the third and fourth planes intersect is determined. In Fig. 3, the alternate long and short dash line shows an example of the straight line L2. In the example shown in Fig. 3, the straight line L2 coincides with the straight line L1. The center P2 of the second base 3 is where the straight line L2 extends through the second base 3. In the example shown in Fig. 3, the straight line L2 preferably coincides with the straight line L1, but they do not necessarily coincide from the perspective of designs. The straight lines L2 and L1 are preferably close to each other.

As noted, the lifting unit 4 includes the first and second lifting units 41 and 42. The first lifting unit 41 is connected to the first site 2a of the first base 2 and to the second site 3a of the second base 3. The second lifting unit 42 is connected to the third site 2b of the first base 2 and the fourth site 3b of the second base 3. In the example shown in Fig. 1A, the first and third sites 2a and 2b sandwich the center P1 of the first base 2. The second and fourth sites 3a and 3b sandwich the center P2 of the second base 3. In the example shown in Fig. 1A, the first and second sites 2a and 3a are next to each other in the lifting direction DA. The third and fourth sites 2b and 3b are next to each other in the lifting direction DA.

The first lifting unit 41 may be connected to the first base 2 at a plurality of connecting sites. In this case, the first site 2a denotes the region between the connecting sites. In the example shown in Fig. 1A, the first lifting unit 41 is connected to the first base 2 at the fixed end 43b. Also, the first lifting unit 41 is connected to the first base 2 at the movable end 43d. In this case, the first site 2a denotes the region of the first base 2 between the site that is connected to the fixed end 43b of the first lifting unit 41 and the site connected to the movable end 43d of the first lifting unit 41. Likewise, the first lifting unit 41 may be connected to the second base 3 at a plurality of connecting sites. In this case, the second site 3a denotes the region between the connecting sites. In the example shown in Fig. 1A, the second site 3a denotes the region of the second base 3 between the site that is connected to the fixed end 43g of the first lifting unit 41 and the site connected to the movable end 43i of the first lifting unit 41. Likewise, the second lifting unit 42 may be connected to the first base 2 at a plurality of connecting sites. In this case, the third site 2b denotes the region between the connecting sites. In the example shown in Fig. 1A, the third site 2b denotes the region of the first base 2 between the site that is connected to the fixed end 43b of the second lifting unit 42 and the site connected to the movable end 43d of the second lifting unit 42. The second lifting unit 42 may be connected to the second base 3 at a plurality of connecting sites. In this case, the fourth site 3b denotes the region between the connecting sites. In the example shown in Fig. 1A, the fourth site 3b denotes the region of the second base 3 between the site that is connected to the fixed end 43g of the second lifting unit 42 and the site connected to the movable end 43i of the second lifting unit 42.

When the lifting unit 4 lifts or lower the second base 3, at least one of the first site 2a or the third site 2b may change. In this case, throughout the lifting or lowering of the second base 3 by the lifting unit 4, the first and third sites 2a and 2b may always sandwich the center P1 of the first base 2. In the example shown in Fig. 1A, the movable end 43d of the first lifting unit 41 and the movable end 43d of the second lifting unit 42 move relative to the first base 2. Accordingly, both of the first and third sites 2a and 2b change as the lifting unit 3 lifts or lowers the second base 3. In the carriage 1 shown in Fig. 1A, throughout the lifting or lowering of the second base 3 by the lifting unit 4, the first and third sites 2a and 2b always sandwich the center P1 of the first base 2. Likewise, the lifting unit 4 lifts or lower the second base 3, at least one of the second site 3a or the fourth site 3b may change. In this case, throughout the lifting or lowering of the second base 3 by the lifting unit 4, the second and fourth sites 3a and 3b may always sandwich the center P2 of the second base 3. In the example shown in Fig. 1A, the movable end 43i of the first lifting unit 41 and the movable end 43i of the second lifting unit 42 move relative to the second base 3. Accordingly, both of the second and fourth sites 3a and 3b change as the lifting unit 4 lifts or lowers the second base 3. In the carriage 1 shown in Fig. 1A, throughout the lifting or lowering of the second base 3 by the lifting unit 4, the second and fourth sites 3a and 3b always sandwich the center P2 of the second base 3.

In the present embodiment, the first and second lifting units 41 and 42 each have the pantograph described above. The first and second lifting units 41 and 42 each have the fixed ends 43b and 43g. The fixed end 43b of the first lifting unit 41 and the fixed end 43b of the second lifting unit 42 may sandwich the center P1 of the first base 2 in the horizontal direction. The fixed end 43g of the first lifting unit 41 and the fixed end 43g of the second lifting unit 42 may sandwich the center P2 of the second base 3 in the horizontal direction.

In the present embodiment, the first base 2 is shaped like a rectangle when seen in the lifting direction DA as described above. This means that the first base 2 has four corners 25. According to the example shown in Fig. 1A, the first site 2a is positioned at a first corner 251 of the first base 2. The third site 2b is positioned at a second corner 252 of the first base 2, which is diagonally opposite to the first corner 251. The first corner 251 is one of the four corners 25. The second corner 252 is also one of the four corners 25 but different from the first corner 251.

In the present embodiment, the second base 3 is shaped like a rectangle when seen in the lifting direction DA. This means that the second base 3 has four corners 31. In the present embodiment, the second site 3a is positioned at a third corner 311. The fourth site 3b is at a fourth corner 312 of the second base 3, which is diagonally opposite to the third corner 311. The third corner 311 is one of the four corners 31. The fourth corner 312 is also one of the four corners 31 but different from the third corner 311.

The phrase "something is positioned at a corner" means that something is at least partially positioned in the vicinity of the vertex of the corner. More specifically, the phrase "something is positioned at a corner" means that the distance between at least part of something and the vertex of the corner in the horizontal direction is 50 cm or less. For example, the phrase "something is positioned at the corner 25 of the first base 2" means that the distance between at least part of something and the vertex of the corner 25 in the horizontal direction is 50 cm or less. As an alternative example, the phrase "something is positioned at the corner 31 of the second base 3" means that the distance between at least part of something and the vertex of the corner 31 in the horizontal direction is 50 cm or less. More specifically, the phrase "the first site 2a is positioned at the first corner 251 of the first base 2" means that the distance between at least part of the first site 2a and the vertex of the first corner 251 in the horizontal direction is 50 cm or less. For example, when something is positioned at a corner, the distance between at least part of something and the vertex of the corner may be 15 cm or less, or 10 cm or less.

In the present embodiment, the first and second lifting units 41 and 42 each have the pantograph described above. The first and second lifting units 41 and 42 each have the fixed ends 43b and 43g. The fixed end 43b of the first lifting unit 41 may be positioned at the first corner 251, and the fixed end 43b of the second lifting unit 42b may be positioned at the second corner 252. The fixed end 43g of the first lifting unit 41 may be positioned at the third corner 311, and the fixed end 43g of the second lifting unit 42 may be positioned at the fourth corner 312.

Since the first and third sites 2a and 2b sandwich the center P1 of the first base 2 and the second and fourth sites 3a and 3b sandwich the center P2 of the second base 3, the following advantages are provided. When the second base 3 is lifted or lowered, the first and second lifting units 41 and 42 respectively apply forces to the second base 3. The respective forces can be almost equal in the horizontal direction. This can result in lifting or lowering the second base 3 in a stable manner. In addition, the center of gravity of the entire lifting unit 4 including the first and second lifting units 41 and 42 can be positioned closer to the centers P1 and P2 in the horizontal direction. This can more reliably prevent the carriage 1 from falling. The carriage 1 can fall if the center of gravity of the lifting unit 4 is shifted from the centers.

The first site 2a is positioned at the first corner 251, the third site 2b is positioned at the second corner 252, the second site 3a is positioned at the third corner 311, and the fourth site 3b is positioned at the fourth corner 312. This can produce the following advantageous effects. When the second base 3 is lifted or lowered, the first and second lifting units 41 and 42 respectively apply forces to the second base 3. The respective forces can be more equal in the horizontal direction. This can result in lifting or lowering the second base 3 in a more stable manner. In addition, the center of gravity of the entire lifting unit 4 including the first and second lifting units 41 and 42 can be positioned closer to the centers P1 and P2 in the horizontal direction. This can more reliably prevent the carriage 1 from falling. The carriage 1 can fall if the center of gravity of the lifting unit 4 is shifted from the centers.

Although not shown, the lifting unit 4 may include other lifting units for lifting or lowering the second base 3 from/to the first base 2, in addition to the first and second lifting units 41 and 42. For example, the lifting unit 4 may include the first and second lifting units 41 and 42 and also include third and fourth lifting units. In this case, the third and fourth lifting units may be configured in the same manner as the first and second lifting units 41 and 42. For example, the third and fourth lifting units may each have a pantograph. In this case, the first base 2 may be connected to the first lifting unit 41, second lifting unit 42, third lifting unit and fourth lifting unit at its sites that are respectively positioned at the four corners 25 of the first base 2. The second base 3 may be connected to the first lifting unit 41, second lifting unit 42, third lifting unit and fourth lifting unit at its sites that are respectively positioned at the four corners 31 of the first base 2.

The loading unit 5 has the fork 51 for loading or unloading objects. In the present embodiment, the loading unit 5 further includes a load lifting unit 52 for lifting or lowering the fork 51 from/to the second base 3, and a mast 53 housing therein the load lifting unit 52.

The fork 51 is configured to hold objects. The fork 51 can be shaped in any manner as long as it can hold objects. In the example shown in Fig. 1A, the fork 51 is constituted by two flat plate-shaped members that extend toward the front side SB1 in the front-rear direction DB.

The load lifting unit 52 is configured to lift or lower the fork 51 from/to the second base 3. The mast 53 houses therein the load lifting unit 52. In the example shown in Fig. 1A, the mast 53 houses therein part of the load lifting unit 52. In the example shown in Fig. 1A, an end 51a of the fork 51 facing the rear side SB2 is connected to the load lifting unit 52. The mast 53 has a pair of linear grooves 54 extending in the lifting direction DA, and the linear grooves 54 are next to each other in the width direction DC. According to the example shown in Fig. 1A, the opposite ends of the load lifting unit 52 in the width direction DC are partially housed in the linear grooves 54 of the mast 53 so that the load lifting unit 52 can slide relative to the mast 53. By sliding relative to the mast 53, the load lifting unit 52 can lift or lower the fork 51 from/to the second base 3. For example, the load lifting unit 52 can slide relative to the mast 53 when driven hydraulically, pneumatically, or electrically (for example, using a combination of a motor and a ball screw),

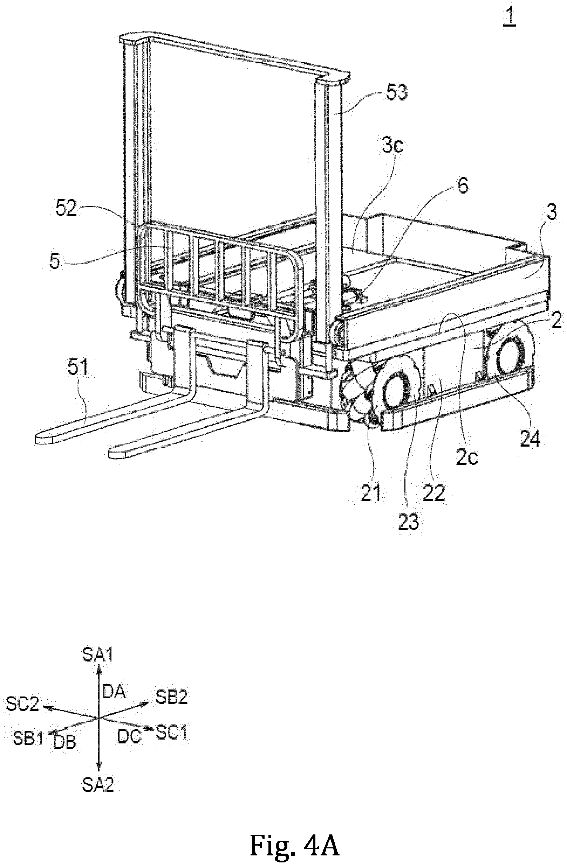

In the present embodiment, the load lifting unit 52 can lift or lower the fork 51 between a position on the upper side SA1 of the upper surface 3c of the second base 3 and a position on the lower side SA2 of the upper surface 3c. Fig. 4A is a perspective view showing the carriage 1 according to the embodiment in a different state than in Figs. 1A, 1B and 3. In the example shown in Fig. 4A, the fork 51 is positioned on the lower side SA2 of the upper surface 3c of the second base 3. In the example shown in Fig. 3, the fork 51 is positioned on the upper side SA1 of the upper surface 3c of the second base 3. The load lifting unit 52 can change the position of the fork 51 relative to the second base 3 between the position shown in Fig. 3 and the position shown in Fig. 4A. If the upper surface 3c is not in a plane perpendicular to the lifting direction DA, the position of the upper surface 3c of the second base 3 in the lifting direction DA is defined as the position in the lifting direction DA of the portion of the upper surface 3c that is positioned at the center P2.

Since the loading unit 5 includes the load lifting unit 52, the fork 51 can be moved even to a position to which the fork 51 cannot be moved by the lifting or lowering of the second base 3 by the lifting unit 4. In the present embodiment, the load lifting unit 52 can lift or lower the fork 51 between a position on the upper side SA1 of the upper surface 3c of the second base 3 and a position on the lower side SA2 of the upper surface 3c. Therefore, the load lifting unit 52 can move the fork 51 to a position on the lower side SA2 of the upper surface 3c of the second base 3 to allow the fork 51 to hold objects located on the lower side SA2 of the upper surface 3c.

In the example shown in Fig. 4A, the lifting unit 4 has moved the second base 3 as far toward the lower side SA2 as possible. While the second base 3 is at this position, the load lifting unit 52 may be allowed to move the fork 51 toward the lower side SA2 beyond the end of the first base 2 facing the upper side SA1 in the lifting direction DA. In a case where the carriage 1 is placed on a flat floor and the lifting unit 4 has moved the second base 3 as far toward the lower side SA2 as possible, the load lifting unit 52 may be capable of further moving the fork 51 until the fork 51 touches the floor. In this way, the fork 51 can hold an object placed at a further position toward the lower side SA2, in particular, an object near the floor.

The following further describes the advantageous effects of the load lifting unit 52. The carriage 1 of the present embodiment includes the first and second bases 2 and 3. The following examines a hypothetical case where the fork 51 cannot move toward the lower side SA2 beyond the upper surface 3c of the second base 3. In this case, there is a region the fork 51 cannot reach. The region at least extends toward the lower side SA2 in the lifting direction DA by a length equal to the total of the sizes of the first and second bases 2 and 3 in the lifting direction DA. According to the present embodiment, the load lifting unit 52 can contribute to reduce the region extending toward the lower side SA2 which the fork 51 cannot reach while the carriage 1 still has the first and second bases 2 and 3.

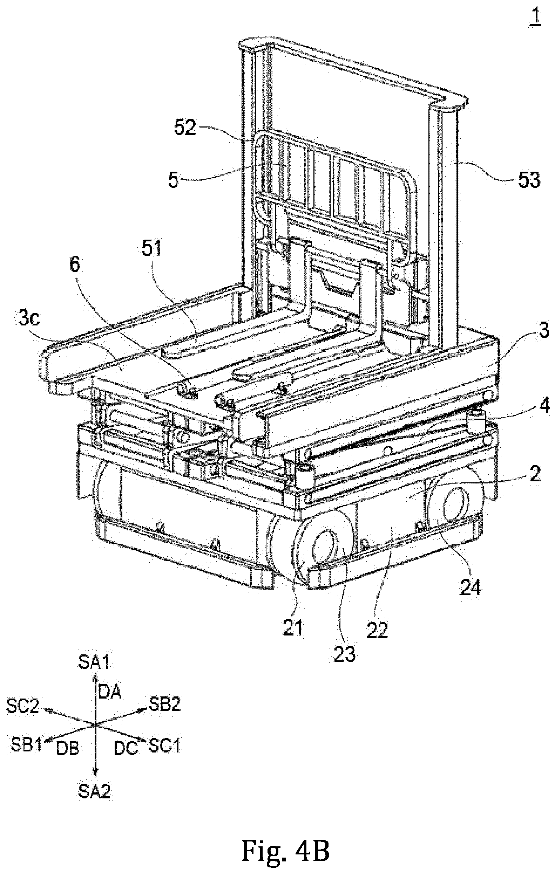

The moving unit 6 is configured to move the loading unit 5 away from/toward the second base 3 in the front-rear direction DB in which the fork 51 extends. Fig. 4B is a perspective view showing the carriage 1 according to the embodiment in a different state than in Figs. 1A, 1B, 3 and 4A. In the present embodiment, the moving unit 6 can change the position of the loading unit 5 relative to the second base 3 between the position shown in Fig. 4B, the position shown in Fig. 1A and the position shown in Fig. 3. The moving unit 6 can move the loading unit 5 between the position where the entire fork 51 is positioned on the front side SB1 of the second base 3 and the position where the fork 51 at least partially overlap the second base 3 when seen in the lifting direction DA. Referring to the state shown in Fig. 4B, the moving unit 6 has moved the loading unit 5 to the position where the fork 51 entirely overlap the second base 3 when seen in the lifting direction DA. Referring to the state shown in Fig. 1A, the moving unit 6 has moved the loading unit 5 to the position where the fork 51 partially overlap the second base 3 when seen in the lifting direction DA. Referring to the state shown in Fig. 3, the moving unit 6 has moved the loading unit 5 to the position where the fork 51 is entirely positioned on the front side SB1 of the first base 2.

The moving unit 6 can be configured in any manner as long as it can move the loading unit 5 from/to the second base 3 in the front-rear direction DB in which the fork 51 extends. According to the example shown in Fig. 1A, the moving unit 6 has a cylinder. In this case, the moving unit 6 can move the loading unit 5 away from/toward the second base 3 as the cylinder is hydraulically or pneumatically driven. The moving unit 6 may be constituted by a ball screw. In this case, the ball screw has a screw shaft extending in the front-rear direction DB and a nut engaging with the screw shaft. As the screw shaft and nut are rotated relative to each other, the positions of the screw shaft and nut change relative to each other in the front-rear direction DB in which the screw shaft extends. Therefore, one of the screw shaft or nut is fixedly attached to the second base 3 and the other is fixedly attached to the loading unit 5. This can allow the ball screw to move the loading unit 5 away from/toward the second base 3. The ball screw may be driven by a motor.

In the present embodiment, the moving unit 6 moves the entire loading unit 5 including the fork 51 and load lifting unit 52 in the front-rear direction DB away from/toward the second base 3. In the present embodiment, the moving unit 6 collectively moves both the loading unit 5 and mast 53 in the front-rear direction DB away from/toward the second base 3. The moving unit 6 can move the loading unit 5 in the front-rear direction DB away from/toward the second base 3 while the load lifting unit 52 keeps the fork 51 positioned on the upper side SA1 of the upper surface 3c of the second base 3.

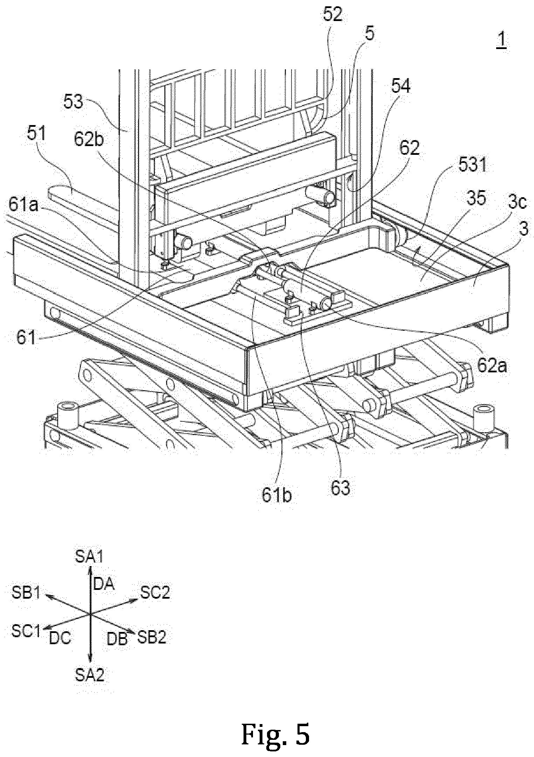

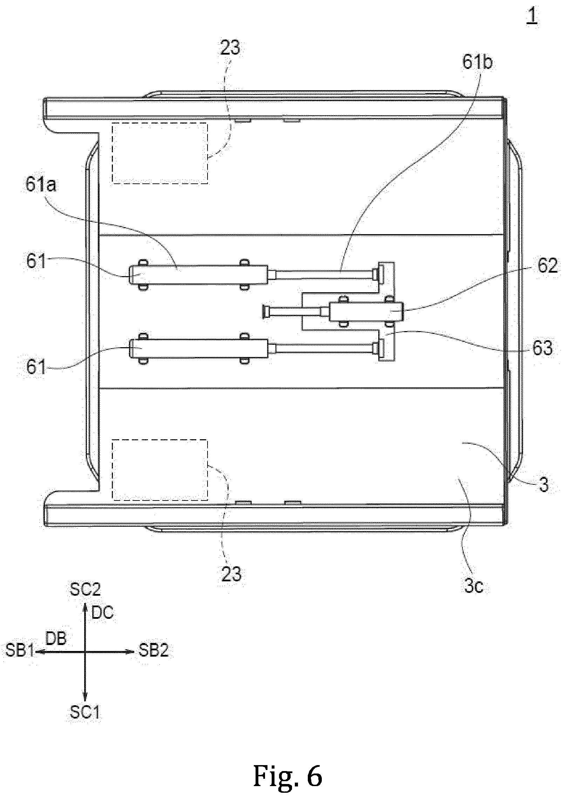

Fig. 5 is a perspective view from the rear side SB2 showing the moving unit 6 and surrounding parts of the carriage 1 in the state shown in Figs. 1A and 1B. Fig. 6 is a plan view from the upper side SA1 in the lifting direction DA showing the carriage 1 in the state shown in Figs. 1A and 1B. In Fig. 6, the loading unit 5 and mast 53 are not shown. In Fig. 6, the front wheels 23 are indicated by the alternate long and short dash line. In the present embodiment, the wheels 21 include more than one front wheel 23.

The moving unit 6 is positioned between the front wheels 23 in the width direction DC, which is perpendicular to the front-rear direction DB and parallel to the horizontal direction. According to the example shown in Fig. 6, the wheels 21 include two front wheels 23 that are arranged next to each other in the width direction DC. According to the example shown in Fig. 6, the moving unit 6 is positioned between the two front wheels 23 in the width direction DC. Although not shown, if the carriage 1 includes three or more front wheels 23, the moving unit 6 may be positioned between any two of the three or more front wheels 23.

According to the example shown in Figs. 5 and 6, the cylinder included in the moving unit 6 includes a first cylinder 61 connected to the second base 3, a second cylinder 63 connected to the loading unit 5 and a connecting unit 63 connected to the first and second cylinders 61 and 62. The first cylinder 61 can move the connecting unit 63 away from/toward the second base 3 in the front-rear direction DB. The second cylinder 62 can move the loading unit 5 away from/toward the connecting unit 63 in the front-rear direction DB. As the first and second cylinders 61 and 62 operate in this manner, the moving unit 6 can move the loading unit 5 in the front-rear direction DB away from/toward the second base 3.

According to the example shown in Figs. 5 and 6, the moving unit 6 has two first cylinders 61. The moving unit 6 has one second cylinder 62. The second cylinder 62 is positioned between the two first cylinders 61 in the width direction DC. The first and second cylinders 61 and 62 both extend in the front-rear direction DB.

The first cylinders 61 each include a first cylinder body 61a shaped like a cylinder extending in the front-rear direction DB and a first rod 61b shaped like a rod extending in the front-rear direction DB. One of the ends of the first rod 61b is housed in the first cylinder body 61a. For example, the first rod 61b is driven hydraulically or pneumatically to move along the inner wall of the first cylinder body 61a, as a result of which the entire length of the first cylinder 61 changes in the front-rear direction DB. The second cylinder 62 includes a second cylinder body 62a shaped like a cylinder extending in the front-rear direction DB and a second rod 62b shaped like a rod extending in the front-rear direction DB. At least one of the ends of the second rod 62b is housed in the second cylinder body 62a. For example, the second rod 62b is driven hydraulically or pneumatically to move along the inner wall of the second cylinder body 62a, as a result of which the entire length of the second cylinder 62 changes in the front-rear direction DB.

In the present embodiment, the first cylinder body 61a is directly connected to the second base 3. The connecting unit 63 is connected to one of the ends of the first rod 61b that is not housed in the first cylinder body 61a. In this manner, as the first rod 61b moves along the inner wall of the first cylinder body 61a, the connecting unit 63 can move from/to the second base 3. The connecting unit 63 is directly connected to the second cylinder body 62a. The second rod 62b is connected to the mast 53. As described above, the opposite ends of the load lifting unit 52 in the width direction DC are housed in the linear grooves 54 of the mast 53. In this manner, the mast 53 is connected to the load lifting unit 52 of the loading unit 5. Accordingly, the second rod 62b is connected to the loading unit 5 via the mast 53. In this manner, as the second rod 62b moves along the inner wall of the second cylinder body 62a, the loading unit 5 and mast 53 can move from/to the connecting unit 53.

Since the moving unit 6 includes the first and second cylinders 61 and 62, the following advantageous effects are provided. The loading unit 5 can move from/to the second base 3 by a distance equal to the total of the change in the length of the first cylinder 61 in the front-rear direction DB and the change in the length of the second cylinder 62 in the front-rear direction DB. As a result, the loading unit 5 can move between the position where the entire fork 51 is positioned on the front side SB1 of the first base 2 and the position where the entire fork 51 overlaps the second base 3 when seen in the lifting direction DA.

In the present embodiment, the second base 3 has a pair of second linear grooves 35 extending in the front-rear direction DB, and the second linear grooves 35 are next to each other in the width direction DC. The opposite ends of the mast 53 in the width direction DC are partially housed in the second linear grooves 35 of the second base 3 so that the mast 53 can slide relative to the second base 3. A guide portion 531 refers to the portion of the mast 53 that is housed in the second linear grooves 35. As the moving unit 6 moves the loading unit 5 and mast 53 in the front-rear direction DB, the guide portion 531 can slide along the pair of second linear grooves 35. The second linear grooves 35 and guide portion 531 can produce the following effects. When the moving unit 6 moves the loading unit 5 and mast 53 in the front-rear direction DB, the pair of second linear grooves 35 and guide portion 531 can guide how the loading unit 5 and mast 53 move.

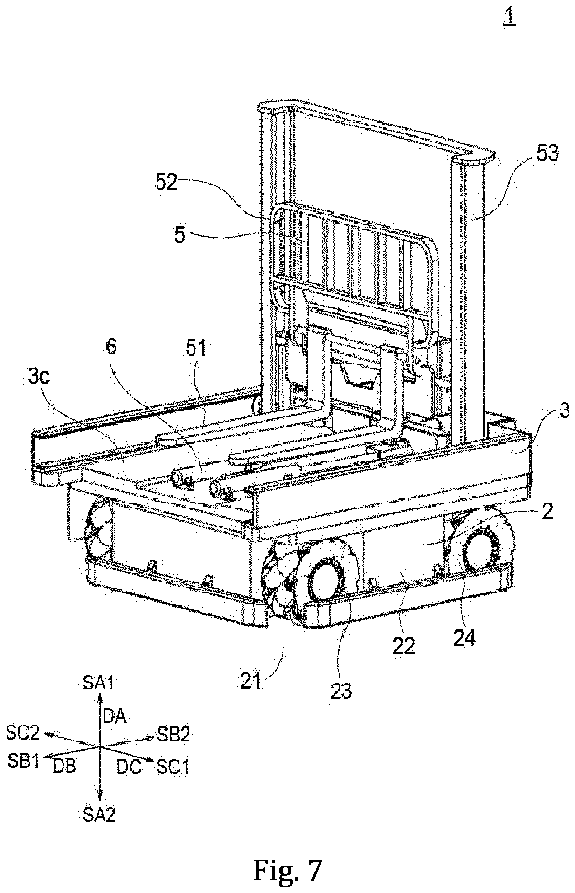

The following describes how the carriage 1 relating to the present embodiment works. Fig. 7 is a perspective view showing the carriage 1 according to the embodiment in a different state than in Figs. 1A, 1B, 3, 4A and 4B. In the example shown in Fig. 7, the load lifting unit 52 keeps the fork 51 positioned on the upper side SA1 of the upper surface 3c of the second base 3. The moving unit 6 keeps the loading unit 5 positioned such that the fork 51 entirely overlaps the second base 3 when seen in the lifting direction DA. The lifting unit 4 keeps the second base 3 at the farthest position which the second base 3 can reach when moved by the lifting unit 4 toward the lower side SA2. The following first describes how the carriage 1 in the state shown in Fig. 7 can lift an object B placed near the floor.

To begin with, the moving unit 6 moves the loading unit 5 to the position where the fork 51 can be entirely positioned on the front side SB1 of the first base 2. Subsequently, the load lifting unit 52 moves the fork 51 toward the lower side SA2. The load lifting unit 52 moves the fork 51 to a position where the fork 51 can suitably hold the object B placed near the floor. As a result, the carriage 1 transitions to the state shown in Fig. 4A.

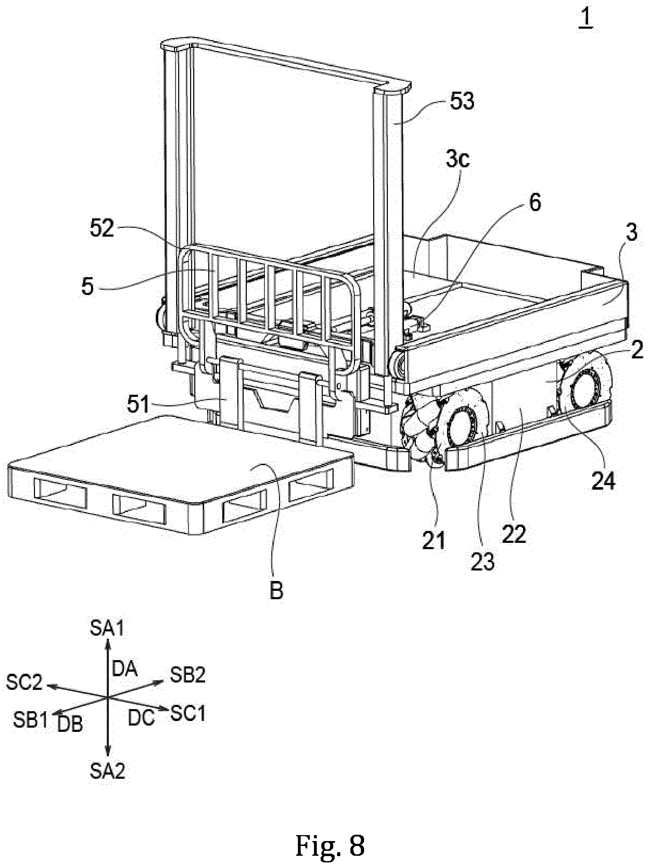

Subsequently, the wheels 21 are driven to cause the carriage 1 to travel. The carriage 1 can approach the object B, and the fork 51 can hold the object B. As a result, the carriage 1 transitions to the state shown in Fig. 8.

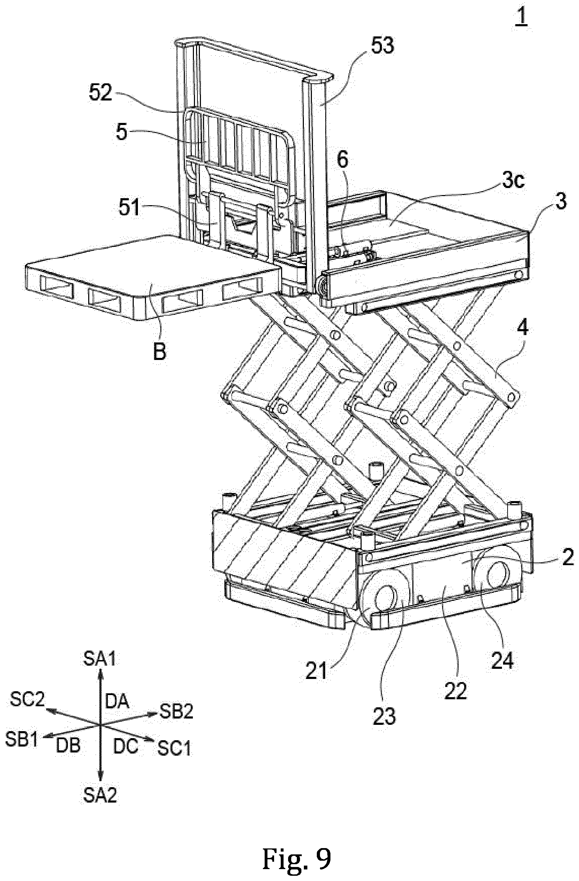

After this, the lifting unit 4 moves the second base 3 toward the upper side SA1. The load lifting unit 52 may move the fork 51 toward the upper side SA1. This results in lifting the object B from the vicinity of the floor toward the upper side SA1, as shown in Fig. 9.

The carriage 1 relating to the present embodiment includes the second base 3 positioned above the first base 2, and the lifting unit 4 for lifting or lowering the second base 3 from/to the first base 2. As shown in Fig. 9, the lifting unit 4 moves the second base 3 toward the upper side SA1 to lift the object B. The carriage 1 relating to the present embodiment can lift the object B while being reliably prevented from falling toward the front side SB1.

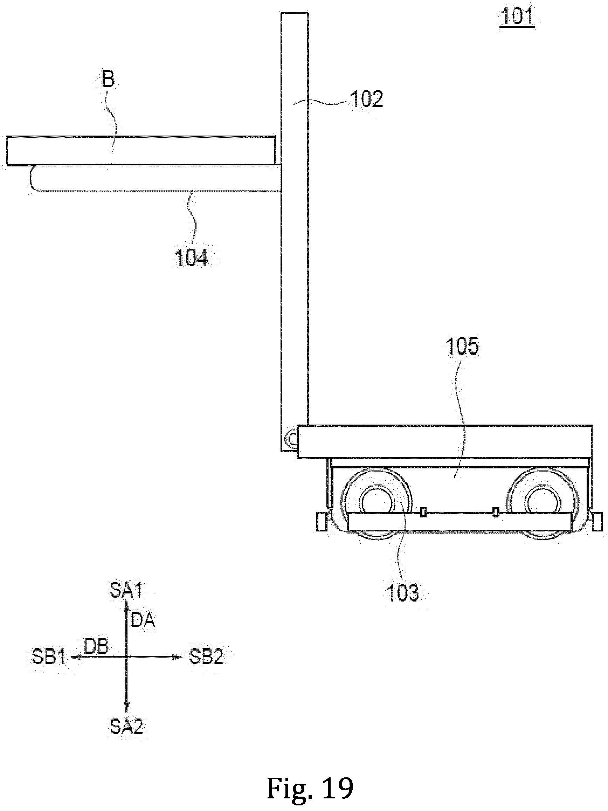

The following describes why the carriage 1 relating to the present embodiment can be reliably prevented from falling toward the front side SB1, in particular, while lifting the object B, with reference to a comparative example. As a comparative example, a carriage 101 is provided that is embodied without the second base 3 and lifting unit 4. Accordingly, the carriage 101 lifts or lowers a fork 104 using only a mast 102 that is positioned on the front side SB1 of the front wheels 103. Fig. 19 is a side view showing the carriage 101 of the comparative example and that the fork 104 is holding the object B. The carriage 101 relating to the comparative example can lift or lower the fork 104 by allowing the fork 104 to slide along the mast 102 extending in the lifting direction DA. In the carriage 101 relating to the comparative example, the mast 102 is positioned on the front side SB1 of the body 105 of the carriage 101, which has the front wheels 103.

As described above, when the carriage 101 falls toward the front side SB1, the carriage 101 may rotate toward the front side SB1 about the point of contact where the front wheels 103 meet the floor on which the carriage 101 is traveling. In the carriage 101 relating to the comparative example, the mast 102 is positioned on the front side SB1 of the body 105 of the carriage 101 having the front wheels 103. Therefore, in the carriage 101 relating to the comparative example, the mast 102 triggers the falling of the carriage 101 toward the front side SB1 due to its weight.

To address this issue, the carriage 1 relating to the present embodiment includes the second base 3 positioned above the first base 2, and the lifting unit 4 for lifting or lowering the second base 3 from/to the first base 2. This means that the lifting unit 4 can be positioned on the upper side SA1 of the first base 2 having the front wheels 23. The lifting unit 4 can be positioned such that its weight is less likely to trigger the falling of the carriage 1 toward the front side SB1. More specifically, as described above, the lifting unit 4 can be arranged such that its center of gravity is positioned on the rear side SB2 of the front wheels 23. In this manner, the weight of the lifting unit 4 can function to prevent the carriage 1 from falling toward the front side SB1. For the reasons stated above, the carriage 1 can be reliably prevented from falling toward the front side SB1. When the object B is lifted high as shown in Figs. 9 and 19, the carriage tends to be unstable since the center of gravity of the object B is located on the upper side SA1. Even in this case, the carriage 1 relating to the present embodiment can be reliably prevented from falling toward the front side SB1.

The carriage 1 of the present embodiment has the second base 3 on the upper side SA1 of the first base 2. In this manner, the weight of the second base 3 can also function to prevent the carriage 1 from falling toward the front side SB1. For this reason, the carriage 1 can be more reliably prevented from falling toward the front side SB1.

The carriage 1 relating to the present embodiment can also produce the following advantageous effects over the carriage 101 of the comparative example. The carriage 101 of the comparative example lifts or lowers the fork 104 using the mast 102 alone. In this case, the mast 102 needs to extend and reach a specific height to which the fork 104 is desired to move in the lifting direction DA. This means that the carriage 101 of the comparative example has an increased height due to the height of the mast 102. On the other hand, the carriage 1 of the present embodiment can move the fork 51 since the lifting unit 4 can move the second base 3. In the present embodiment, the lifting unit 4 includes a pantograph. Thus, the present embodiment does not require the mast to extend and reach a specific height to which the fork 51 is desired to move in the lifting direction DA. Therefore, the carriage 1 relating to the present embodiment can have a reduced height.

The following describes a different manner of how the carriage 1 relating to the present embodiment works. As shown in Fig. 8, the carriage 1 holds the object B with the fork 51, transports the object B in the horizontal direction and puts the object B on a stage T that is positioned on the upper side SA1 of the floor. In this case, the carriage 1 can work as follows.

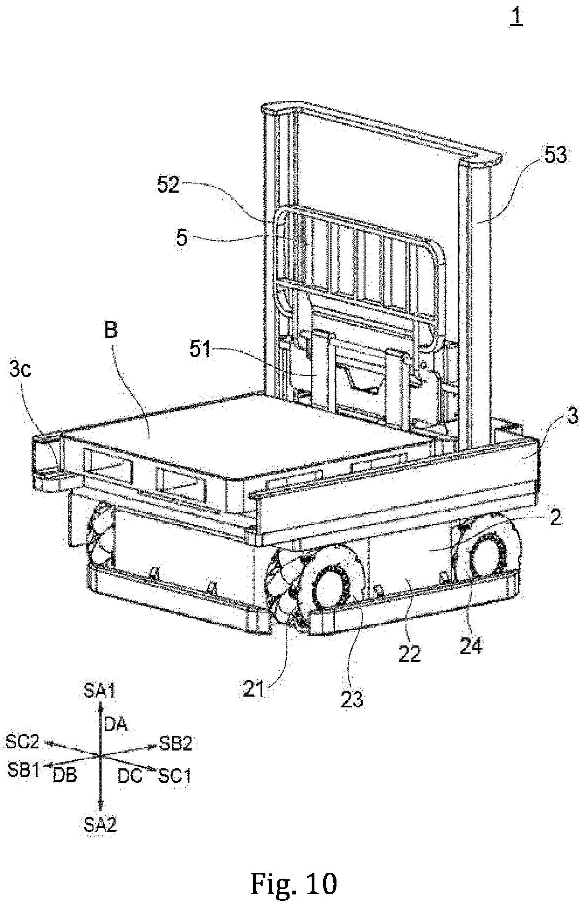

The load lifting unit 52 moves the fork 51 such that the fork 51 is positioned on the upper side SA1 of the upper surface 3c of the second base 3. Subsequently, the moving unit 6 moves the loading unit 5 to the position where the entire fork 51 overlaps the second base 3 when seen in the lifting direction DA. As a result, the carriage 1 transitions to the state shown in Fig. 10.

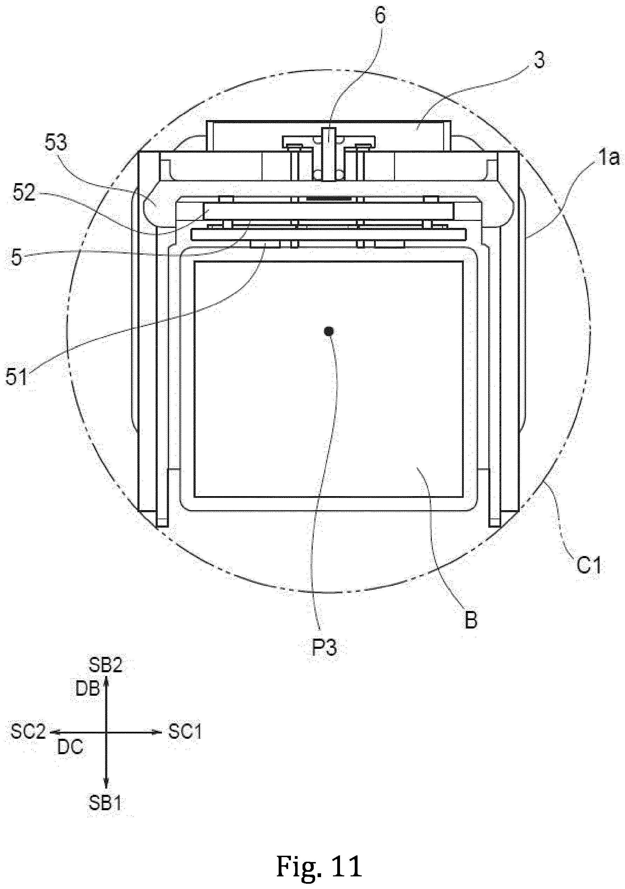

Fig. 11 is a plan view from the upper side SA1 in the lifting direction DA showing the carriage 1 in the state shown in Fig. 10. In the example shown in Fig. 11, the moving unit 6 has moved the loading unit 5 to as far toward the rear side SB2 as possible. The moving unit 6 moves the loading unit 5 so that at least part of the object B held by the fork 51 is positioned to overlap the second base 3 when seen in the lifting direction DA. The carriage 1 may keep the object B at a position where the object B entirely overlaps the second base 3 when seen in the lifting direction DA.

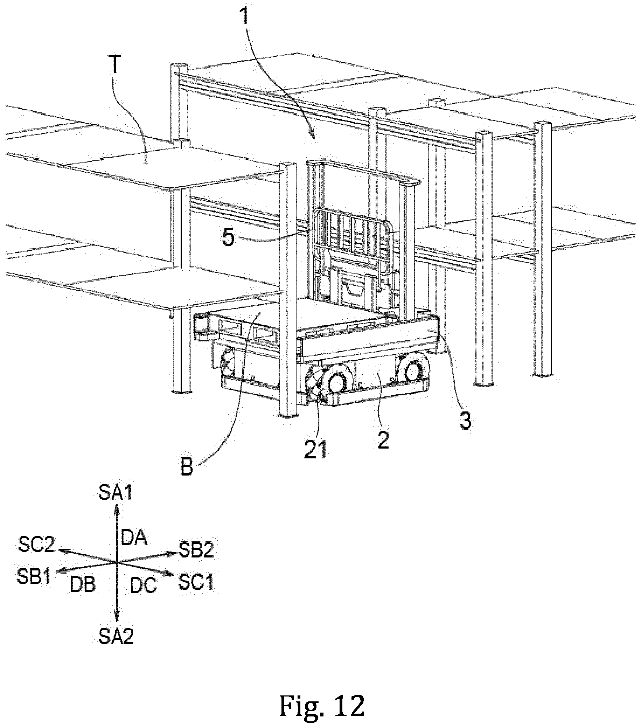

While the carriage 1 is in the state shown in Figs. 10 and 11, the wheels 21 are driven to cause the carriage 1 to travel. The carriage 1 thus moves to a position in front of the stage T where the object B is expected to be placed, as shown in Fig. 12.

As shown in Figs. 10 and 11, the carriage 1 can travel with at least part of the object B being positioned to overlap the second base 3 when seen in the lifting direction DA. This produces the following advantageous effects. This can more reliably prevent the carriage 1 from falling due to the weight of the object B than in a case where the carriage 1 may travel with the object B being kept on the front side SB1 of the second base 3. In addition, the carriage 1 can have a reduced width in the front-rear direction DB. As a result, the carriage 1 can travel through narrower spaces.

In the present embodiment, the wheels 21 of the carriage 1 are mecanum wheels. The carriage 1 can keep the object B being positioned to at least partially overlap the second base 3 when seen in the lifting direction DA, and the wheels 21 are mecanum wheels. In this manner, the present embodiment can produce the following advantageous effects. The carriage 1 can travel in the horizontal direction in other directions than the front-rear direction DB and can have a reduced width in the front-rear direction DB. As a result, even through a narrow space, the carriage 1 can travel in a desired direction to a desired position.

Furthermore, since the wheels 21 are mecanum wheels, the carriage 1 can pivot on a pivot axis that extends through the carriage 1 in the horizontal direction. This characteristic configuration can further produce the following advantageous effects. Fig. 11 shows a circle C1 indicated by the alternate long and two short dashes line. The circle C1 has the smallest radius among circles that circumscribe an outline 1a of the combination of the carriage 1 and object B when seen from the upper side SA1 in the lifting direction DA. In Fig. 11, the center of the circle C1 is referred to as a point P3. Since the carriage 1 has mecanum wheels, the carriage 1 can pivot on the point P3 within a space sized and shaped equivalently to the circle C1. As a result, the carriage 1 can freely change its directions in the horizontal direction within a small space.

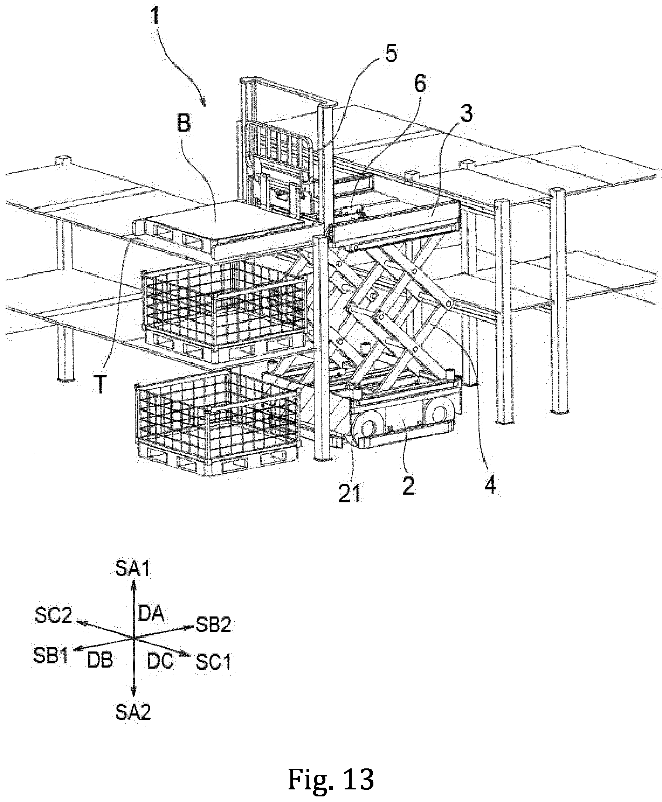

After the carriage 1 has moved to the position shown in Fig. 12, the lifting unit 4 moves the second base 3 toward the upper side SA1. Following this, the moving unit 6 moves the loading unit 5 toward the front side SB1. In this way, the object B can be placed on the stage T as shown in Fig. 13.

The carriage 1 relating to the above-described embodiment includes the first base 2, second base 3 positioned above the first base 2, lifting unit 4 for lifting or lowering the second base 3 from/to the first base 2, loading unit 5 and moving unit 6. Accordingly, the lifting unit 4 can be arranged at a position where the weight of the lifting unit 4 is less likely to cause the carriage 1 to fall toward the front side SB1. Additionally, the weight of the second base 3 can also function to prevent the carriage 1 from falling toward the front side SB1. For the reasons stated above, the carriage 1 can be provided that is less likely to fall.

In the present embodiment, the wheels 21 include the front and rear wheels 23 and 24. The carriage 1 is thus predicted to fall toward the front side SB1 if the carriage 1 rotates toward the front side SB1 about the point of contact where the front wheels 23 meet the floor on which the carriage 1 is traveling. The carriage 1 relating to the present embodiment can be reliably prevented from falling toward the front side SB1.

In the present embodiment, the center of gravity of the lifting unit 4 is positioned on the rear side SB2 of the front wheels 23. In this manner, the weight of the lifting unit 4 can function to prevent the carriage 1 from falling toward the front side SB1.

In the present embodiment, the loading unit 5 includes the load lifting unit 52 for lifting or lowering the fork 51 from/to the second base 3. Accordingly, the fork 51 can be moved even to a position which the fork 51 cannot reach through the lifting or lowering of the second base 3 by the lifting unit 4.

In the present embodiment, the load lifting unit 52 can lift or lower the fork 51 between the position on the upper side SA1 of the upper surface 3c of the second base 3 and the position on the lower side SA2 of the upper surface 3c. This enables the fork 51 to hold an object placed on the lower side SA2 of the upper surface 3c. When this feature is combined with the advantages of the moving unit 6, the loading unit 5 can be moved to a position where the fork 51 can at least partially overlap the second base 3 in the lifting direction DA.

In the present embodiment, the loading unit 5 includes the mast 53 housing therein the load lifting unit 52. Therefore, the fork 51 can be lifted or lowered from/to the second base 3 by the load lifting unit 52 sliding relative to the mast 53.

In the present embodiment, the first and third sites 2a and 2b sandwich the center P1 of the first base 2. The second and fourth sites 3a and 3b sandwich the center P2 of the second base 3. When the second base 3 is lifted or lowered, the first and second lifting units 41 and 42 respectively apply forces to the second base 3. The respective forces can be almost equal in the horizontal direction. In addition, the center of gravity of the entire lifting unit 4 including the first and second lifting units 41 and 42 can be positioned closer to the centers P1 and P2 in the horizontal direction.

In the present embodiment, the first site 2a is positioned at the first corner 251, the third site 2b is positioned at the second corner 252, the second site 3a is positioned at the third corner 311, and the fourth site 3b is at the fourth corner 312. When the second base 3 is lifted or lowered, the first and second lifting units 41 and 42 respectively apply forces to the second base 3. The respective forces can be more equal in the horizontal direction. In addition, the center of gravity of the entire lifting unit 4 including the first and second lifting units 41 and 42 can be positioned closer to the centers P1 and P2 in the horizontal direction.

According to the present embodiment, the moving unit 6 is positioned between the front wheels 23 in the width direction DC. In this way, the driving force of the moving unit 6 can be transmitted to the loading unit 5 at a position close to the center of the carriage 1 in the width direction DC. Therefore, the loading unit 5 can be moved from/to the second base 3 in a more stable manner.

According to the present embodiment, the moving unit 6 includes the first cylinder 61, second cylinder 62 and connecting unit 63 connected to the first and second cylinders 61 and 62. Accordingly, the loading unit 5 can be moved from/to the second base 3 by a distance equal to the total of the change in the length of the first cylinder 61 in the front-rear direction DB and the change in the length of the second cylinder 62 in the front-rear direction DB.

In the present embodiment, the wheels 21 are mecanum wheels. Accordingly, the carriage 1 can move in other directions than the front-rear direction DB.

While the foregoing has described the embodiment through specific examples, these specific examples are not intended to limit the embodiment. The foregoing embodiment can be implemented in various other specific forms and is susceptible to omission, replacement, modification and addition of various elements thereof within the purport of the invention.

With reference to the appended drawings, the following describes modification examples. In the following description and the drawings used therein, parts that can be configured in a similar manner to those in the foregoing specific example are denoted by the same reference signs as those in the foregoing specific example and are not described again.

### <First Modification Example>

According to the above-described embodiment, the lifting unit 4 includes pantographs. The lifting unit 4, however, can be configured in any manner as long as it can move the second base 3 from/to the first base 2 in the lifting direction DA. The lifting unit 4 may be constituted by a ball screw. In this case, the ball screw has a screw shaft extending in the lifting direction DA and a nut engaging with the screw shaft. As the screw shaft and nut are rotated relative to each other, the positions of the screw shaft and nut change relative to each other in the lifting direction DA in which the screw shaft extends. Therefore, one of the screw shaft or nut is fixedly attached to the first base 2 and the other is fixedly attached to the second base 3. This can allow the ball screw to move the second base 3 in the lifting direction DA from/to the first base 2. The ball screw may be driven by a motor. The lifting unit 4 can hydraulically or pneumatically move the second base 3 from/to the first base 2 in the lifting direction DA. In this case, the lifting unit 4 may have a mast fixedly attached to the first base 2 and extending in the lifting direction DA. In this case, the second base 3 is hydraulically or pneumatically moved along the mast, so that the second base 3 can be lifted or lowered.

### <Second Modification Example>

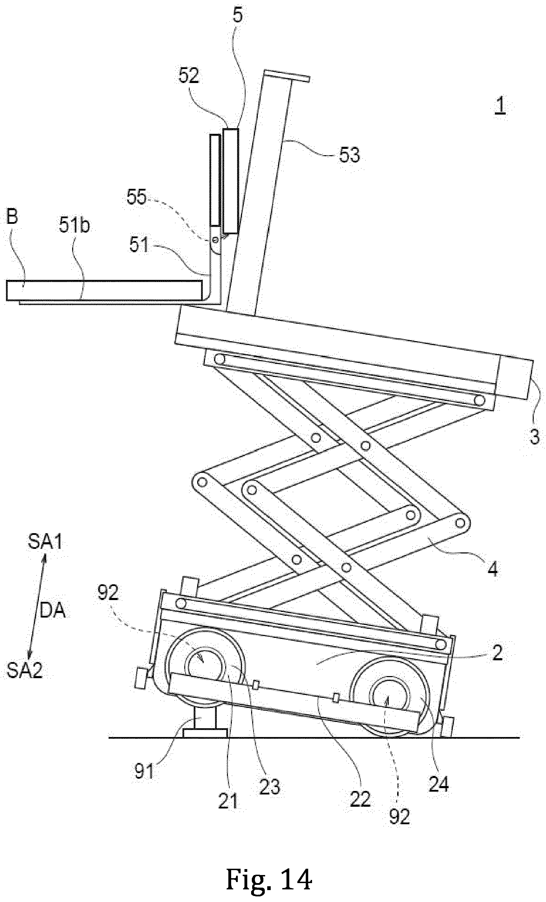

The carriage 1 may include a front wheel lifting unit 91 for lifting a portion of the first base 2 that faces the front side SB1 so that the front wheels 23 move away from the plane on which the carriage 1 is placed. Fig. 14 is a side view showing an example of the carriage 1 in a second modification example. In the example shown in Fig. 14, the carriage 1 has the front wheel lifting unit 91. The front wheel lifting unit 91 lifts a portion of the first base 2 that faces the front side SB1 so that the front wheels 23 move away from the floor on which the carriage 1 is placed. As a result, the carriage 1 is in contact with the floor at the end of the front wheel lifting unit 91 that faces the lower side SA2 and at the rear wheels 24.

The front wheel lifting unit 91 can be configured in any manners as long as it can lift a portion of the first base 2 that faces the front side SB1. In the example shown in Fig. 14, the front wheel lifting unit 91 is positioned on the lower side SA2 of the first base body 22. For example, the front wheel lifting unit 91 is positioned between the front wheels 23 in the width direction DC. The front wheel lifting unit 91 may be an outrigger that projects from the first base 2 toward a first side SC1 and a second side SC2 in the width direction DC. The front wheel lifting unit 91 may be a cylinder that is driven hydraulically or pneumatically to expand or collapse in the lifting direction DA. The front wheel lifting unit 91 may be a ball screw having a screw shaft extending in the lifting direction DA and a nut engaging with the screw shaft. The first base 2 may be fixedly attached to one of the screw shaft or the nut. The front wheel lifting unit 91 may be constituted by a linkage.

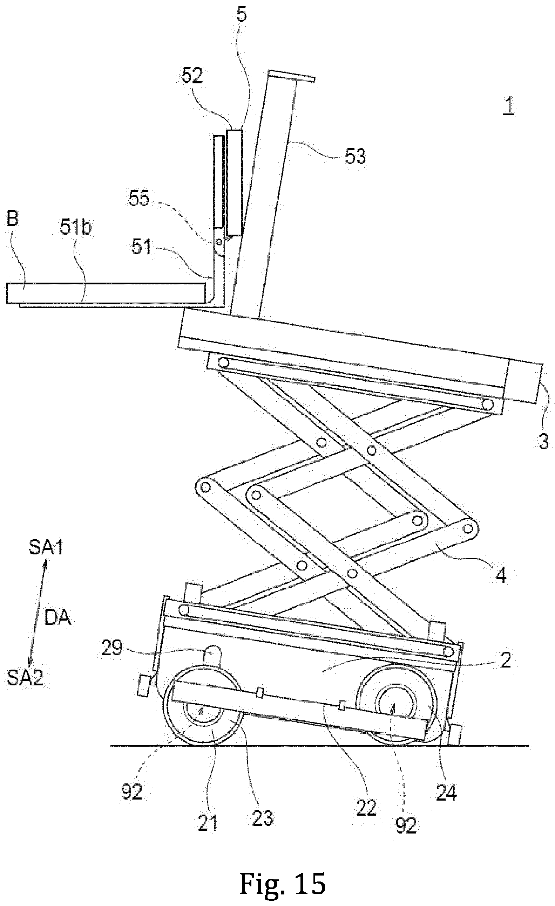

The following describes another example of the carriage 1 relating to the second modification example. Fig. 15 is a side view showing another example of the carriage 1 relating to the second modification example. In the example shown in Fig. 15, the first base 2 includes the first base body 22 having the wheels 21 provided thereon. The first base 2 includes a first base body lifting unit 29 for changing the distance between the front wheels 23 and the first base body 22 in the lifting direction DA.

The first base body lifting unit 29 increases the distance between the front wheels 23 and the first base body 22 in the lifting direction DA, thereby lifting a portion of the first base body 22 that faces the front side SB as shown in Fig. 15. While the front and rear wheels 23 and 24 are in contact with the flat floor, the first base body lifting unit 29 can change the distance between the front wheels 23 and the first base body 22 in the lifting direction DA in such a manner that the direction perpendicular to the floor coincides with the lifting direction DA. In the example shown in Fig. 15, the first base body lifting unit 29 lifts a portion of the first base body 22 that faces the front side SB1. Therefore, the portion of the first base body 22 that faces the front side SB1 is more distant from the floor than is a portion of the first base body 22 that faces the rear side SB2.

The first base body lifting unit 29 can be configured in any manners as long as it can change the distance between the front wheels 23 and the first base body 22 in the lifting direction DA. The first base body lifting unit 29 may be a suspension mounted to the front wheels 23 for tuning the vehicle height.

According to the second modification example, the portion of the first base 2 that faces the front side SB1 is lifted as shown in Fig. 14, or the portion of the first base body 22 that faces the front side SB1 is lifted as shown in Fig. 15. As a result, the center of gravity of the carriage 1 can be shifted toward the rear side SB2. In this way, the carriage 1 can be reliably prevented from falling toward the front side SB1. When the object B is held on the fork 51 and lifted high as shown in Figs. 14 and 15, the carriage 1 tends to be unstable since the center of gravity of the object B is located on the upper side SA1. Even in this case, the carriage 1 can be reliably prevented from falling toward the front side SB1.

In the example shown in Fig. 14, the front wheel lifting unit 91 has no portion protruding toward the front side SB1 beyond the first base body 22. In the example shown in Fig. 15, the first base body lifting unit 29 has no portion protruding toward the front side SB1 beyond the first base body 22. The front wheel lifting unit 91 or first base body lifting unit 29 can produce the following advantageous effects. Another way to prevent the carriage 1 from falling toward the front side SB1 is to provide a support member that protrudes toward the front side SB1 beyond the first base body 22 and that touches the floor on the front side SB1 of the first base body 22. The carriage 1 can be prevented from falling by such a support member. This support member, however, may not be useful if there is an obstacle on the front side SB1 of the carriage 1. The front wheel lifting unit 91 shown in Fig. 14 or first base body lifting unit 29 shown in Fig. 15 can work even if there is an obstacle on the front side SB1 of the carriage 1.

In the second modification example, the carriage 1 may include sensors 92 for measuring the load applied to the front and rear wheels 23 and 24. In this case, the sensors 92 may be load sensors. The sensors 92 may be provided on the rotational shafts of the front and rear wheels 23 and 24 to measure how much the shape of the rotational shafts is distorted by the load. In this manner, the sensors 92 can measure the load. The position of the center of gravity of the carriage 1 can be calculated by the sensors 92, which can measure the load applied to the front and rear wheels 23 and 24. When the fork 51 holds the object B, the position of the center of the gravity of the combination of the carriage 1 and object B can be calculated. Based on the calculated position of the center of gravity, it can be determined how much the front wheel lifting unit 91 should lift the portion of the first base 2 that faces the front side SB1 or how much the first base body lifting unit 29 should lift the portion of the first base body 22 that faces the front side SB1 to prevent the carriage 1 from falling. For example, how much the front wheel lifting unit 91 should lift the portion of the first base 2 that faces the front side SB1 or how much the first base body lifting unit 29 can lift the portion of the first base body 22 that faces the front side SB1 can be determined such that the center of gravity of the carriage 1, or the center of gravity of the combination of the carriage 1 and object B is positioned on the rear side SB2 of the front wheels 23.

Additionally, other parameters may be measured including the position of the mast 53 in the lifting direction DA, the angle formed between the direction in which the mast 53 extends and the direction perpendicular to the floor, the amount of protrusion of the fork 51 toward the front side SB1, and the weight of the object B held by the fork 51. These numerical values may be obtained by measuring the states of the parts of the carriage 1 and performing calculation based on the measurements. Here, measuring the states of the parts of the carriage 1 may include measuring the pressure of a cylinder that is provided in the carriage 1 and configured to drive some of the parts of the carriage 1 hydraulically or pneumatically. For example, the load lifting unit 52 may include such a cylinder, which, when driven hydraulically or pneumatically, can cause the load lifting unit 52 to slide relative to the mast 53. The pressure of this cylinder may be measured. The moving unit 6 also includes cylinders, i.e., the first and second cylinders 61 and 62 described above. The pressure of the first and second cylinders 61 and 62 may be measured. Alternatively, a gyrosensor may be provided on a part of the carriage 1 that is configured to rotate while the carriage 1 is in operation. In this case, measuring the states of the parts of the carriage 1 may include measuring the angular speed of the rotating part. In these alternative manners, the position of the center of gravity of the carriage 1, or the position of the center of gravity of the combination of the carriage 1 and object B can be also calculated. Based on the calculated position of the center of gravity, it can be determined how much the front wheel lifting unit 91 or first base body lifting unit 29 should be operated.

The sensors 92 may measure the load applied to the front and rear wheels 23 and 24 at different times. Likewise, the states of the parts of the carriage 1 may be measured at different times, and, based on these measurements, the position of the mast 53 in the lifting direction DA, the angle formed between the direction in which the mast 53 extends and the direction perpendicular to the floor, the amount of protrusion of the fork 51 toward the front side SB1, and the weight of the object B held by the fork 51 may be measured at different times. Based on these measurements at different times, how much the front wheel lifting unit 91 or first base body lifting unit 29 is operated can be adjusted at different times.

In the example shown in Figs. 14 and 15, the loading unit 5 includes a tuning unit 55 for tuning the inclination angle of the holding surface 51b of the fork 51 on which the object B is held. The tuning unit 55 can be configured in any manner as long as it can tune the inclination angle of the holding surface 51b. In the example shown in Figs. 14 and 15, the tuning unit 55 tunes the inclination angle of the holding surface 51b by rotating part of the load lifting unit 52 and fork 51 relative to the mast 53.

In a case where the loading unit 5 includes the tuning unit 55, the tuning unit 55 may tune the inclination angle of the holding surface 51b based on various measurements including: the load applied to the front and rear wheels 23 and 24, which is measured by the sensors 92; the states of the parts of the carriage 1; and the parameters calculated based on the foregoing measurements such as the position of the mast 53 in the lifting direction DA, the angle formed between the direction in which the mast 53 extends and the direction perpendicular to the floor, the amount of protrusion of the fork 51 toward the front side SB1, and the weight of the object B held by the fork 51. For example, based on the foregoing measurements, the tuning unit 55 may tune the inclination angle of the holding surface 51b such that the holding surface 51b lies parallel to the floor on which the carriage 1 is placed. Accordingly, the fork 51 can still stably hold the object B on the holding surface 51b while the front wheel lifting unit 91 lifts the portion of the first base 2 that faces the front side SB1 and the first base body lifting unit 29 lifts the portion of the first base body 22 that faces the front side SB1.

### <Third Modification Example>

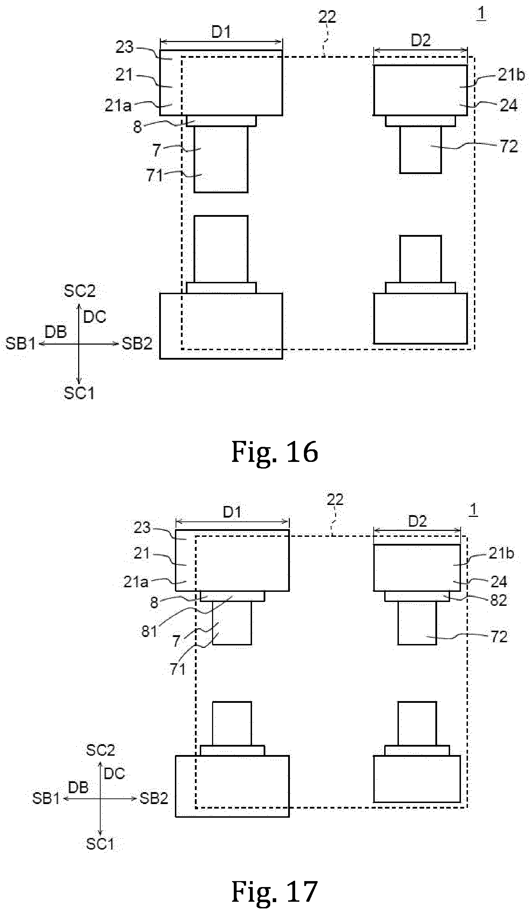

The wheels 21 of the carriage 1 may have different diameters. Fig. 16 shows an example of the wheels 21 of the carriage 1 in a third modification example, as well as the motors 7 and speed reducers 8 attached to the respective wheels 21. Fig. 17 shows another example of the wheels 21 of the carriage 1 in the third modification example, as well as the motors 7 and speed reducers 8 attached to the respective wheels 21. Figs. 16 and 17 are plan views showing the wheels 21, motors 7, speed reducers 8 and first base body 22 from the upper side SA1 in the lifting direction DA. Figs. 16 and 17 do not show the other parts of the carriage 1 than the wheels 21, motors 7, speed reducers 8 and first base body 22. Figs. 16 and 17 do not show the details of the shape of the wheels 21, motors 7 and speed reducers 8 and only show the general outline of the wheels 21, motors 7 and speed reducers 8. Figs. 16 and 17 do not show the details of the shape of the first base body 22 and only shows the general outline of the first base body 22 using a dotted line.

According to the example shown in Figs. 16 and 17, the wheels 21 include first wheels 21a and second wheels 21b having a smaller diameter than the first wheel 21a. In the example shown in Figs. 16 and 17, the diameter D1 of the first wheels 21a is greater than the diameter D2 of the second wheels 21b. In the example shown in Figs. 16 and 17, the first wheels 21a are the front wheels 23 positioned on the front side SB1 in the front-rear direction DB. The second wheels 21b are the rear wheels 24 positioned on the rear side SB2 of the front wheels 23, where the rear side SB2 is opposite to the front side SB1 in the front-rear direction DB.

Since the wheels 21 include the first and second wheels 21a and 21b, the following advantageous effects are provided. As for the carriage 1 including the wheels 21, there is a possible case where a high load may be applied to only one or more of the wheels 21 and not to the other wheels 21. Since the carriage 1 has the fork 51 protruding toward the front side SB1, it is possible that a high load may be applied to the front wheels 23 due to the weight of the fork 51 and the weight of the object held by the fork 51. It is anticipated that the load applied to the rear wheels 24 is not as high as the load applied to the front wheels 23. If a high load is applied to only one or more of the wheels 21, the traveling of the carriage may be compromised. To alleviate such an adverse effect, the wheels 21 to which a high load is likely to be applied may be constituted by the first wheels 21a having a large diameter. In particular, when the wheels 21 are mecanum wheels, the third modification example can reduce the negative impact on the rollers 27a that is created by the high load applied to only some of the wheels 21. For example, the rollers 27 of the wheels 21 to which a high load is applied may be worn out more quickly than the rollers 27 of the other wheels 21. This can be prevented in the third modification example. In the carriage 1 having the fork 51 protruding toward the front side SB1, the front wheels 23 are the first wheels 21a and the rear wheels 24 are the second wheels 21b as shown in Figs. 16 and 17. In this way, the adverse effect on the traveling of the carriage 1, which is caused by a high load applied only to the front wheels 23, can be alleviated.

In the example shown in Fig. 16, the carriage 1 includes, as the motors 7, first motors 71 for inputting rotation to the first wheels 21a and second motors 72 for inputting rotation to the second wheels 21b. For example, the first motors 71 have greater output capacity than the second motors 72. In the example shown in Fig. 16, the first motors 71 are constituted by large motors 7 having greater output capacity than the second motors 72. The following advantageous effects can be produced since the first motors 71 have larger output capacity than the second motors 72. Since the first wheels 21 have a greater diameter than the second wheels 21b, rotating the first wheels 21a requires a higher torque than rotating the second wheels 21b. Since the first motors 71 have larger output capacity than the second motors 72, the first motor 71 can apply a high torque to the first wheels 21a. This enables the carriage 1 to stably travel while the carriage 1 uses the first and second wheels 21a and 21b of different diameters.

In the example shown in Fig. 17, the carriage 1 includes, as the motors 7, first motors 71 for inputting rotation to the first wheels 21a and second motors 72 for inputting rotation to the second wheels 21b. The carriage 1 includes, as the speed reducers 8, first speed reducers 81 for reducing the rotation input from the first motors 71 and transmitting the reduced rotation to the first wheels 21a and second speed reducers 82 for reducing the rotation input from the second motors 72 and transmitting the reduced rotation to the second wheels 21b. The first speed reducers 81 have a higher reduction ratio than the second speed reducers 82. In this case, the first and second motors 71 and 72 have equal output capacity, for example. In the example shown in Fig. 17, the first and second motors 71 and 72 are constituted by the motors 7 having the same output capacity and the same size. The following advantageous effects can be produced since the first speed reducers 81 have a higher reduction ratio than the second speed reducers 82. Unlike the example shown in Fig. 16, a high torque can be applied to the first wheels 21a without requiring that the first motors 71 be constituted by the motors 7 having larger output capacity than the second motors 72. For example, the first and second motors 71 and 72 can be constituted by motors 7 having equal output capacity. According to the example shown in Fig. 17, the carriage 1 can also stably travel while using the first and second wheels 21a and 21b of different diameters.

For example, the ratio of the diameter D1 of the first wheels 21a to the diameter D2 of the second wheels 21b is equal to the ratio of the reduction ratio of the first speed reducers 81 to the reduction ratio of the second speed reducers 82. For example, when the ratio of the diameter D1 of the first wheels 21a to the diameter D2 of the second wheels 21b is 2:1 and the ratio of the circumference of the first wheels 21a to the circumference of the second wheels 21b is thus 2:1, the ratio of the reduction ratio of the first speed reducers 81 to the reduction ratio of the second speed reducers 82 may be 2:1. In this manner, the carriage 1 can still stably travel even with the first and second motors 71 and 72 being constituted by motors 7 having equal output capacity.

The feature that the wheels 21 have the first and second wheels 21a and 21b may be applicable to the carriage 1 that is embodied without the loading unit 5. In this case, the carriage 1 may be embodied without at least one of the second base 3, lifting unit 4 or moving unit 6.

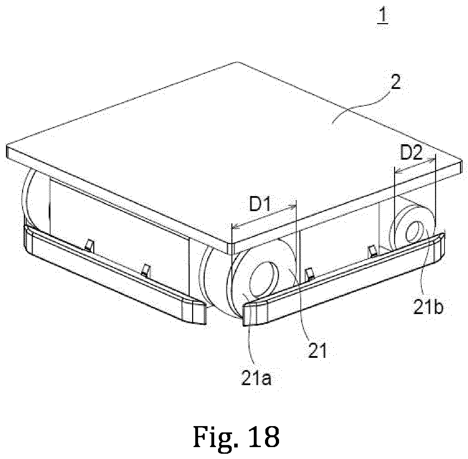

Fig. 18 is a perspective view showing an example of the carriage 1 in the third modification example. The carriage 1 shown in Fig. 18 includes the first base 2 having the wheels 21. According to the example shown in Fig. 18, the wheels 21 include the first wheels 21a and the second wheels 21b having a smaller diameter than the first wheel 21a. In the example shown in Fig. 18, the diameter D1 of the first wheels 21a is greater than the diameter D2 of the second wheels 21b. In the example shown in Fig. 18, the carriage 1 is embodied without the loading unit 5, second base 3, lifting unit 4 and moving unit 6.

The carriage 1 shown in Fig. 18 is a carrier that does not require an operator to assist its traveling such as an automatic guided vehicle (AGV) and a rail guided vehicle (RGV) (i.e., an unmanned carrier).

The carriage 1 may be embodied without the loading unit 5 and the wheels 21 may include the first and second wheels 21a and 21b. In this case, the carriage 1 may include the first and second motors 71 and 72. The first motors 71 may be constituted by large motors 7 having greater output capacity than the second motors 72. The carriage 1 includes the first speed reducers 81 for reducing the rotation input from the first motors 71 and transmitting the reduced rotation to the first wheels 21a and the second speed reducers 82 for reducing the rotation input from the second motors 72 and transmitting the reduced rotation to the second wheels 21b.

The carriage 1 may be embodied without the loading unit 5, the wheels 21 may include the first and second wheels 21a and 21b and the carriage 1 may include the first and second motors 71 and 72. In this case, the carriage 1 may include the first and second speed reducers 81 and 82. The first speed reducers 81 may have a higher reduction ratio than the second speed reducers 82.

The carriage 1 embodied with the loading unit 5 is described in the foregoing embodiment and modification examples. As long as they are consistent, the descriptions hold true for the carriage 1 embodied without the loading unit 5 in the third modification example.

The carriage 1 in the third modification example includes the first base 2 having the wheels 21. The wheels 21 include the first wheels 21a and the second wheels 21b having a smaller diameter than the first wheels 21a.

The carriage 1 in the third modification example may include the first motors 71 for inputting rotation to the first wheels 21a and the second motors 72 for inputting rotation to the second wheels 21b. In this case, the first motors 71 may have larger output capacity than the second motors 72.

The carriage 1 in the third modification example may include the first motors 71 for inputting rotation into the first wheels 21a, the first speed reducers 81 for reducing the rotation input from the first motors 71 and transmitting the reduced rotation to the first wheels 21a, the second motors 72 for inputting rotation into the second wheels 21b, and the second speed reducers 82 for reducing the rotation input from the second motors 72 and transmitting the reduced rotation to the second wheels 21b. In this case, the first speed reducers 81 may have a higher reduction ratio than the second speed reducers 82.

The carriage 1 in the third modification example may further include the second base 3 positioned above the first base 2, the lifting unit 4 for lifting or lowering the second base 3 from/to the first base 2, the loading unit 5 having the fork 51 for holding objects and loading or unloading the objects, and the moving unit 6 for moving the loading unit 5 from/to the second base 3 in the front-rear direction DB in which the fork 51 extends.

When the carriage 1 is embodied with the loading unit 5 in the third modification example, the first wheels 21a may be the front wheels 23 positioned on the front side SB1 in the front-rear direction DB toward which the fork 51 extends. The second wheels 21b may be the rear wheels 24 positioned on the rear side SB2 of the front wheels 23, where the rear side SB2 is opposite to the front side SB1 in the front-rear direction DB.

The foregoing embodiments disclosed herein describe a plurality of physically separate constituent parts. They may be combined into a single part, and any one of them may be divided into a plurality of physically separate constituent parts. Irrespective of whether or not the constituent parts are integrated, they are acceptable as long as they are defined by the claims.

Aspects of the invention are not limited to the foregoing embodiments and embrace various modifications conceivable by those skilled in the art. Advantageous effects of the invention are also not limited to those described above. That is, various additions, changes, and partial deletions are possible in a range of not departing from the present invention as defined in the claims.

## Claims

1. A carriage (1) comprising:
a first base (2) including wheels (21);
a second base (3) positioned above the first base (2);
a lifting unit (41, 42) for lifting the second base (3) from the first base (2) or lowering the second base (3) to the first base (2);
a loading unit (5) having a fork (51) for holding an object, the loading unit (5) being configured to load or unload an object; and
a moving unit (6) for moving the loading unit (5) away from or toward the second base (3) in a front-rear direction (DB) in which the fork (51) extends,
**characterized in that**
the loading unit (5) includes a load lifting unit (52) for lifting the fork (51) from the second base (3) or lowering the fork (51) toward the second base (3).
wherein the load lifting unit (52) lifts or lowers the fork (51) between a position above an upper surface (3c) of the second base (3) and a position below the upper surface (3c).

2. The carriage (1) of claim 1, wherein the wheels (21) include:
one or more front wheels (23) positioned on a front side (SB1) toward which the fork (51) extends in the front-rear direction (DB); and
one or more rear wheels (24) positioned on a rear side (SB2) of the front wheel (23), the rear side (SB2) being opposite to the front side (SB1) in the front-rear direction (DB).

3. The carriage (1) of claim 2, wherein a center of gravity of the lifting unit (41, 42) is positioned on a rear side (SB2) of the front wheel (23).

4. The carriage (1) according to any of claim 1 to 3, wherein the loading unit (5) has a mast (53) housing therein the load lifting unit (52).

5. The carriage (1) according to any of claims 1 to 4,
wherein the lifting unit (41, 42) includes:
a first lifting unit (41) that is connected to a first site (2a) of the first base (2) and to a second site (3a) of the second base (3), the first lifting unit (41) being configured to lift the second base (3) from the first base (2) or lower the second base (3) to the first base (2); and
a second lifting unit (42) that is connected to a third site (2b) of the first base (2) and to a fourth site (3b) of the second base (3), the second lifting unit (42) being configured to lift the second base (3) from the first base (2) or lower the second base (3) to the first base (2),
wherein the first and third sites (2a, 2b) sandwich a center of the first base (2) in the front-rear direction (DB) and in a width direction (DC) that is perpendicular to the front-rear direction (DB) and parallel to a horizontal direction, and
wherein the second and fourth sites (3a, 3b) sandwich a center of the second base (3) in the front-rear direction (DB) and in the width direction (DC).

6. The carriage (1) of claim 5,
wherein the first base (2) is shaped like a rectangle when seen in a lifting direction (DA) in which the lifting unit (41, 42) lifts or lowers the second base (3),
wherein the first site (2a) is positioned at a first corner (251) of the first base (2),
wherein the third site (2b) is positioned at a second corner (252) of the first base (2), the second corner (252) being diagonally opposite to the first corner (251),
wherein the second base (3) is shaped like a rectangle when seen in the lifting direction (DA),
wherein the second site (3a) is positioned at a of the second base (3), and
wherein the fourth site is positioned at a fourth corner of the second base (3), the fourth corner being diagonally opposite to the third corner (311).

7. The carriage (1) of claim 2, comprising
a front wheel lifting unit (41, 42) for lifting a portion of the first base (2) that faces a front side (SB1) such that the front wheel (23) moves away from a surface on which the carriage (1) is placed.

8. The carriage (1) of claim 2, wherein the first base (2) includes:
a first base (2) body having the wheels (21); and
a first base (2) body lifting unit (41, 42) for changing a distance between the front wheel (23) and the first base (2) body in a lifting direction (DA) in which the lifting unit (41, 42) lifts or lowers the second base (3).

9. The carriage (1) of claim 7 or 8, comprising
a sensor (92) for measuring a load applied to the front wheel (23) and a load applied to the rear wheel (24).

10. The carriage (1) of claim 2 or 3,
wherein the wheels (21) include a plurality of front wheels (23), and
wherein the moving unit (6) is positioned between the front wheels (23) in a width direction (DC) that is perpendicular to the front-rear direction (DB) and parallel to a horizontal direction.

11. The carriage (1) of claim 1 or 2,
wherein the moving unit (6) includes:
a first cylinder (61) connected to the second base (3);
a second cylinder (62) connected to the loading unit (5); and
a connecting unit (63) connected to the first and second cylinders,
wherein the first cylinder (61) moves the connecting unit (63) from or to the second base (3) in the front-rear direction (DB), and
wherein the second cylinder (62) moves the loading unit (5) from or to the connecting unit (63) in the front-rear direction (DB)..

12. The carriage (1) of claim 1, wherein the wheels (21) include a first wheel (21a) and a second wheel (21b) having a smaller diameter than the first wheel (21a).

13. The carriage (1) of claim 12, comprising:
a first motor (71) for inputting rotation into the first wheel (21a); and
a second motor (72) for inputting rotation into the second wheel (21b),
wherein the first motor (71) has larger output capacity than the second motor (72).

14. The carriage (1) of claim 12, comprising:
a first motor (71) for inputting rotation into the first wheel (21a);
a first speed reducer (81) for reducing rotation input from the first motor (71) and transmitting the reduced rotation to the first wheel (21a);
a second motor (72) for inputting rotation into the second wheel (21b); and
a second speed reducer (82) for reducing rotation input from the second motor (72) and transmitting the reduced rotation into the second wheel (21b),
wherein the first speed reducer (81) has a higher reduction ratio than the second speed reducer (82).

15. The carriage (1) of any one of claims 12 to 14,
wherein the first wheel (21a) is a front wheel (23) positioned on a front side (SB1) toward which the fork (51) extends in the front-rear direction (DB), and
wherein the second wheel (21b) is a rear wheel (24) positioned on a rear side (SB2) of the front wheel (23) in the front-rear direction (DB), the rear side (SB2) being opposite to the front side (SB1).

16. The carriage (1) of claim 1 or 2, wherein the wheels are mecanum wheels.

## Patentansprüche

1. Schlitten (1), umfassend:
eine erste Basis (2), die Räder (21) aufweist;
eine zweite Basis (3), die oberhalb der ersten Basis (2) angeordnet ist;
eine Hubeinheit (41, 42) zum Anheben der zweiten Basis (3) von der ersten Basis (2) oder zum Absenken der zweiten Basis (3) zu der ersten Basis (2);
eine Ladeeinheit (5), die eine Gabel (51) zum Halten eines Objekts aufweist, wobei die Ladeeinheit (5) dazu eingerichtet ist, ein Objekt zu laden oder zu entladen; und
eine Bewegungseinheit (6) zum Bewegen der Ladeeinheit (5) von der zweiten Basis (3) weg oder zu dieser hin in einer Vorne-hinten-Richtung (DB), in der sich die Gabel (51) erstreckt,
**dadurch gekennzeichnet, dass**
die Ladeeinheit (5) eine Lasthubeinheit (52) zum Anheben der Gabel (51) von der zweiten Basis (3) oder zum Absenken der Gabel (51) zu der zweiten Basis (3) aufweist,
wobei die Lasthubeinheit (52) die Gabel (51) zwischen einer Position oberhalb einer Oberseite (3c) der zweiten Basis (3) und einer Position unterhalb der Oberseite (3c) anhebt oder absenkt.

2. Schlitten (1) nach Anspruch 1, wobei die Räder (21) aufweisen:
ein oder mehrere Vorderräder (23), die auf einer Vorderseite (SB1) angeordnet sind, zu der hin sich die Gabel (51) in der Vorne-hinten-Richtung (DB) erstreckt; und
ein oder mehrere Hinterräder (24), die auf einer Rückseite (SB2) des Vorderrads (23) angeordnet sind, wobei die Rückseite (SB2) der Vorderseite (SB1) in der Vorne-hinten-Richtung (DB) gegenüberliegt.

3. Schlitten (1) nach Anspruch 2, wobei ein Schwerpunkt der Hubeinheit (41, 42) auf einer Rückseite (SB2) des Vorderrads (23) angeordnet ist.

4. Schlitten (1) nach einem der Ansprüche 1 bis 3, wobei die Ladeeinheit (5) einen Mast (53) aufweist, in dem die Lasthubeinheit (52) aufgenommen ist.

5. Schlitten (1) nach einem der Ansprüche 1 bis 4,
wobei die Hubeinheit (41, 42) aufweist:
eine erste Hubeinheit (41), die mit einer ersten Stelle (2a) der ersten Basis (2) und mit einer zweiten Stelle (3a) der zweiten Basis (3) verbunden ist, wobei die erste Hubeinheit (41) dazu eingerichtet ist, die zweite Basis (3) von der ersten Basis (2) anzuheben oder die zweite Basis (3) zu der ersten Basis (2) abzusenken; und
eine zweite Hubeinheit (42), die mit einer dritten Stelle (2b) der ersten Basis (2) und mit einer vierten Stelle (3b) der zweiten Basis (3) verbunden ist, wobei die zweite Hubeinheit (42) dazu eingerichtet ist, die zweite Basis (3) von der ersten Basis (2) anzuheben oder die zweite Basis (3) zu der ersten Basis (2) abzusenken,
wobei die erste und die dritte Stelle (2a, 2b) einen Mittelpunkt der ersten Basis (2) in der Vorne-hinten-Richtung (DB) und in einer Breitenrichtung (DC), die senkrecht zu der Vorne-hinten-Richtung (DB) und parallel zu einer horizontalen Richtung ist, zwischen sich einschließen, und
wobei die zweite und die vierte Stelle (3a, 3b) einen Mittelpunkt der zweiten Basis (3) in der Vorne-hinten-Richtung (DB) und in der Breitenrichtung (DC) zwischen sich einschließen.

6. Schlitten (1) nach Anspruch 5,
wobei die erste Basis (2) bei Betrachtung in einer Hubrichtung (DA), in der die Hubeinheit (41, 42) die zweite Basis (3) anhebt oder absenkt, rechteckig ausgebildet ist,
wobei die erste Stelle (2a) an einer ersten Ecke (251) der ersten Basis (2) angeordnet ist,
wobei die dritte Stelle (2b) an einer zweiten Ecke (252) der ersten Basis (2) angeordnet ist, wobei die zweite Ecke (252) der ersten Ecke (251) diagonal gegenüberliegt,
wobei die zweite Basis (3) bei Betrachtung in der Hubrichtung (DA) rechteckig ausgebildet ist,
wobei die zweite Stelle (3a) an einer der zweiten Basis (3) angeordnet ist, und
wobei die vierte Stelle an einer vierten Ecke der zweiten Basis (3) angeordnet ist, wobei die vierte Ecke einer dritten Ecke (311) diagonal gegenüberliegt.

7. Schlitten (1) nach Anspruch 2, umfassend
eine Vorderradhubeinheit (41, 42) zum Anheben eines Abschnitts der ersten Basis (2), der einer Vorderseite (SB1) zugewandt ist, derart, dass sich das Vorderrad (23) von einer Fläche wegbewegt, auf der der Schlitten (1) angeordnet ist.

8. Schlitten (1) nach Anspruch 2, wobei die erste Basis (2) aufweist:
einen Körper der ersten Basis (2), der die Räder (21) aufweist; und
eine Hubeinheit (41, 42) für den Körper der ersten Basis (2) zum Verändern eines Abstands zwischen dem Vorderrad (23) und dem Körper der ersten Basis (2) in einer Hubrichtung (DA), in der die Hubeinheit (41, 42) die zweite Basis (3) anhebt oder absenkt.

9. Schlitten (1) nach Anspruch 7 oder 8, umfassend
einen Sensor (92) zum Messen einer auf das Vorderrad (23) ausgeübten Last und einer auf das Hinterrad (24) ausgeübten Last.

10. Schlitten (1) nach Anspruch 2 oder 3,
wobei die Räder (21) eine Mehrzahl von Vorderrädern (23) aufweisen, und
wobei die Bewegungseinheit (6) zwischen den Vorderrädern (23) in einer Breitenrichtung (DC) angeordnet ist, die senkrecht zu der Vorne-hinten-Richtung (DB) und parallel zu einer horizontalen Richtung ist.

11. Schlitten (1) nach Anspruch 1 oder 2,
wobei die Bewegungseinheit (6) aufweist:
einen ersten Zylinder (61), der mit der zweiten Basis (3) verbunden ist;
einen zweiten Zylinder (62), der mit der Ladeeinheit (5) verbunden ist; und
eine Verbindungseinheit (63), die mit dem ersten und dem zweiten Zylinder verbunden ist,
wobei der erste Zylinder (61) die Verbindungseinheit (63) in der Vorne-hinten-Richtung (DB) von der zweiten Basis (3) weg oder zu dieser hin bewegt, und
wobei der zweite Zylinder (62) die Ladeeinheit (5) in der Vorne-hinten-Richtung (DB) von der Verbindungseinheit (63) weg oder zu dieser hin bewegt..

12. Schlitten (1) nach Anspruch 1, wobei die Räder (21) ein erstes Rad (21a) und ein zweites Rad (21b) aufweisen, das einen kleineren Durchmesser als das erste Rad (21a) aufweist.

13. Schlitten (1) nach Anspruch 12, umfassend:
einen ersten Motor (71) zum Einleiten einer Drehung in das erste Rad (21a); und
einen zweiten Motor (72) zum Einleiten einer Drehung in das zweite Rad (21b),
wobei der erste Motor (71) eine größere Ausgangsleistung als der zweite Motor (72) aufweist.

14. Schlitten (1) nach Anspruch 12, umfassend:
einen ersten Motor (71) zum Einleiten einer Drehung in das erste Rad (21a);
ein erstes Untersetzungsgetriebe (81) zum Untersetzen einer von dem ersten Motor (71) eingeleiteten Drehung und zum Übertragen der untersetzten Drehung auf das erste Rad (21a);
einen zweiten Motor (72) zum Einleiten einer Drehung in das zweite Rad (21b); und
ein zweites Untersetzungsgetriebe (82) zum Untersetzen einer von dem zweiten Motor (72) eingeleiteten Drehung und zum Übertragen der untersetzten Drehung auf das zweite Rad (21b),
wobei das erste Untersetzungsgetriebe (81) ein höheres Untersetzungsverhältnis als das zweite Untersetzungsgetriebe (82) aufweist.

15. Schlitten (1) nach einem der Ansprüche 12 bis 14,
wobei das erste Rad (21a) ein Vorderrad (23) ist, das auf einer Vorderseite (SB1) angeordnet ist, zu der hin sich die Gabel (51) in der Vorne-hinten-Richtung (DB) erstreckt, und
wobei das zweite Rad (21b) ein Hinterrad (24) ist, das in der Vorne-hinten-Richtung (DB) auf einer Rückseite (SB2) des Vorderrads (23) angeordnet ist, wobei die Rückseite (SB2) der Vorderseite (SB1) gegenüberliegt.

16. Schlitten (1) nach Anspruch 1 oder 2, wobei die Räder Mecanum-Räder sind.

## Revendications

1. Chariot (1) comprenant :
une première base (2) comportant des roues (21) ;
une seconde base (3) positionnée au-dessus de la première base (2) ;
une unité de levage (41, 42) destinée à soulever la seconde base (3) de la première base (2) ou à abaisser la seconde base (3) vers la première base (2) ;
une unité de chargement (5) comportant une fourche (51) destinée à maintenir un objet, l'unité de chargement (5) étant configurée pour charger ou décharger un objet ; et
une unité de déplacement (6) destinée à déplacer l'unité de chargement (5) en l'éloignant de la seconde base (3) ou en la rapprochant de celle-ci dans une direction avant-arrière (DB) dans laquelle la fourche (51) s'étend,
**caractérisé en ce que**
l'unité de chargement (5) comporte une unité de levage de charge (52) destinée à soulever la fourche (51) de la seconde base (3) ou à abaisser la fourche (51) vers la seconde base (3),
dans lequel l'unité de levage de charge (52) soulève ou abaisse la fourche (51) entre une position au-dessus d'une surface supérieure (3c) de la seconde base (3) et une position au-dessous de la surface supérieure (3c).

2. Chariot (1) selon la revendication 1, dans lequel les roues (21) comportent :
une ou plusieurs roues avant (23) positionnées sur un côté avant (SB1) vers lequel la fourche (51) s'étend dans la direction avant-arrière (DB) ; et
une ou plusieurs roues arrière (24) positionnées sur un côté arrière (SB2) de la roue avant (23), le côté arrière (SB2) étant opposé au côté avant (SB1) dans la direction avant-arrière (DB).

3. Chariot (1) selon la revendication 2, dans lequel un centre de gravité de l'unité de levage (41, 42) est positionné sur un côté arrière (SB2) de la roue avant (23).

4. Chariot (1) selon l'une quelconque des revendications 1 à 3, dans lequel l'unité de chargement (5) comporte un mât (53) dans lequel est logée l'unité de levage de charge (52).

5. Chariot (1) selon l'une quelconque des revendications 1 à 4,
dans lequel l'unité de levage (41, 42) comporte :
une première unité de levage (41) qui est reliée à un premier emplacement (2a) de la première base (2) et à un deuxième emplacement (3a) de la seconde base (3), la première unité de levage (41) étant configurée pour soulever la seconde base (3) de la première base (2) ou abaisser la seconde base (3) vers la première base (2) ; et
une seconde unité de levage (42) qui est reliée à un troisième emplacement (2b) de la première base (2) et à un quatrième emplacement (3b) de la seconde base (3), la seconde unité de levage (42) étant configurée pour soulever la seconde base (3) de la première base (2) ou abaisser la seconde base (3) vers la première base (2),
dans lequel les premier et troisième emplacements (2a, 2b) encadrent un centre de la première base (2) dans la direction avant-arrière (DB) et dans une direction de largeur (DC) qui est perpendiculaire à la direction avant-arrière (DB) et parallèle à une direction horizontale, et
dans lequel les deuxième et quatrième emplacements (3a, 3b) encadrent un centre de la seconde base (3) dans la direction avant-arrière (DB) et dans la direction de largeur (DC).

6. Chariot (1) selon la revendication 5,
dans lequel la première base (2) a la forme d'un rectangle lorsqu'elle est vue dans une direction de levage (DA) dans laquelle l'unité de levage (41, 42) soulève ou abaisse la seconde base (3),
dans lequel le premier emplacement (2a) est positionné au niveau d'un premier coin (251) de la première base (2),
dans lequel le troisième emplacement (2b) est positionné au niveau d'un deuxième coin (252) de la première base (2), le deuxième coin (252) étant diagonalement opposé au premier coin (251),
dans lequel la seconde base (3) a la forme d'un rectangle lorsqu'elle est vue dans la direction de levage (DA),
dans lequel le deuxième emplacement (3a) est positionné à un de la seconde base (3), et
dans lequel le quatrième emplacement est positionné au niveau d'un quatrième coin de la seconde base (3), le quatrième coin étant diagonalement opposé à un troisième coin (311).

7. Chariot (1) selon la revendication 2, comprenant
une unité de levage de roue avant (41, 42) destinée à soulever une partie de la première base (2) qui fait face à un côté avant (SB1), de sorte que la roue avant (23) s'éloigne d'une surface sur laquelle le chariot (1) est placé.

8. Chariot (1) selon la revendication 2, dans lequel la première base (2) comporte :
un corps de la première base (2) comportant les roues (21) ; et
une unité de levage (41, 42) du corps de la première base (2) destinée à modifier une distance entre la roue avant (23) et le corps de la première base (2) dans une direction de levage (DA) dans laquelle l'unité de levage (41, 42) soulève ou abaisse la seconde base (3).

9. Chariot (1) selon la revendication 7 ou 8, comprenant
un capteur (92) destiné à mesurer une charge appliquée à la roue avant (23) et une charge appliquée à la roue arrière (24).

10. Chariot (1) selon la revendication 2 ou 3,
dans lequel les roues (21) comportent une pluralité de roues avant (23), et
dans lequel l'unité de déplacement (6) est positionnée entre les roues avant (23) dans une direction de largeur (DC) qui est perpendiculaire à la direction avant-arrière (DB) et parallèle à une direction horizontale.

11. Chariot (1) selon la revendication 1 ou 2,
dans lequel l'unité de déplacement (6) comporte :
un premier vérin (61) relié à la seconde base (3) ;
un second vérin (62) relié à l'unité de chargement (5) ; et
une unité de liaison (63) reliée aux premier et second vérins,
dans lequel le premier vérin (61) déplace l'unité de liaison (63) en l'éloignant de la seconde base (3) ou en la rapprochant de celle-ci dans la direction avant-arrière (DB), et
dans lequel le second vérin (62) déplace l'unité de chargement (5) en l'éloignant de l'unité de liaison (63) ou en la rapprochant de celle-ci dans la direction avant-arrière (DB)..

12. Chariot (1) selon la revendication 1, dans lequel les roues (21) comportent une première roue (21a) et une seconde roue (21b) ayant un diamètre inférieur à celui de la première roue (21a).

13. Chariot (1) selon la revendication 12, comprenant :
un premier moteur (71) destiné à appliquer une rotation à la première roue (21a) ; et
un second moteur (72) destiné à appliquer une rotation à la seconde roue (21b),
dans lequel le premier moteur (71) présente une puissance de sortie supérieure à celle du second moteur (72).

14. Chariot (1) selon la revendication 12, comprenant :
un premier moteur (71) destiné à appliquer une rotation à la première roue (21a) ;
un premier réducteur de vitesse (81) destiné à réduire une rotation entrée depuis le premier moteur (71) et à transmettre la rotation réduite à la première roue (21a) ;
un second moteur (72) destiné à appliquer une rotation à la seconde roue (21b) ; et
un second réducteur de vitesse (82) destiné à réduire une rotation entrée depuis le second moteur (72) et à transmettre la rotation réduite à la seconde roue (21b),
dans lequel le premier réducteur de vitesse (81) présente un rapport de réduction supérieur à celui du second réducteur de vitesse (82).

15. Chariot (1) selon l'une quelconque des revendications 12 à 14,
dans lequel la première roue (21a) est une roue avant (23) positionnée sur un côté avant (SB1) vers lequel la fourche (51) s'étend dans la direction avant-arrière (DB), et
dans lequel la seconde roue (21b) est une roue arrière (24) positionnée, dans la direction avant-arrière (DB), sur un côté arrière (SB2) de la roue avant (23), le côté arrière (SB2) étant opposé au côté avant (SB1).

16. Chariot (1) selon la revendication 1 ou 2, dans lequel les roues sont des roues Mecanum.
